# EUROPÄISCHE PATENTSCHRIFT

(11) **EP 4 118 564 B1**
(45) Veröffentlichungstag und Bekanntmachung des Hinweises auf die Patenterteilung: **25.11.2026**
(21) Anmeldenummer: 21711805.8
(22) Anmeldetag: 09.03.2021
(51) Int. Cl.: G06V 20/58, G06V 10/20, G06V 10/44, G06V 10/147, G06V 20/64

(54) **VERFAHREN ZUM STEUERN EINES FAHRZEUGES AUF EINEM BETRIEBSHOF, FAHRTSTEUEREINHEIT UND FAHRZEUG**
METHOD FOR CONTROLLING A VEHICLE IN A DEPOT, TRAVEL CONTROL UNIT AND VEHICLE
PROCÉDÉ DE COMMANDE D'UN VÉHICULE DANS UN DÉPÔT, UNITÉ DE COMMANDE DE CONDUITE, ET VÉHICULE

(30) Priorität: 09.03.2020 DE 102020106304
(43) Veröffentlichungstag der Anmeldung: 18.01.2023
(73) Patentinhaber: ZF CV Systems Global GmbH, 3006 Bern (CH)
(72) Erfinder: RICKE, Janik, 31311 Uetze (DE); KLINGER, Tobias, 31832 Springe (DE)
(74) Vertreter: Rabe, Dirk-Heinrich
(86) Internationale Anmeldenummer: PCT/EP2021/055831
(87) Internationale Veröffentlichungsnummer: WO 2021/180671

(56) Entgegenhaltungen:
- EP-A1- 2 634 070
- DE-A1- 102018 210 340
- DE-T5- 112020 001 106
- US-A1- 2005 281 436
- BESL P J ET AL: "A METHOD FOR REGISTRATION OF 3-D SHAPES", IEEE TRANSACTIONS ON PATTERN ANALYSIS AND MACHINE INTELLIGENCE, IEEE COMPUTER SOCIETY, USA, vol. 14, no. 2, 1 February 1992 (1992-02-01), pages 239 - 256, XP000248481, ISSN: 0162-8828, DOI: 10.1109/34.121791
- TANNER STOKES: "Garage door detection with OpenCV and Python", 13 February 2015 (2015-02-13), pages 1, XP054981867, Retrieved from the Internet <URL:https://www.youtube.com/watch?v=fCRlvkibfxc> [retrieved on 20210604]

## Beschreibung

Die Erfindung betrifft ein Verfahren zum Steuern eines Fahrzeuges auf einem Betriebshof, eine Fahrt-Steuereinheit zur Durchführung des Verfahrens sowie ein Fahrzeug.

Aus dem Stand der Technik ist bekannt, ein Fahrzeug autonom bzw. automatisiert an eine Station bzw. ein Objekt, beispielsweise eine Rampe auf einem Betriebshof anzunähern. In DE 10 2016 116 857 A1 ist dazu beispielsweise beschrieben, dass das Fahrzeug auf Befehl automatisiert auf einem Betriebshof von einer Station zu einer weiteren Station fährt. Die richtige Rampe bzw. der Pfad, auf dem sich das Fahrzeug innerhalb des Betriebshofes bewegt, wird jedoch nicht vom Fahrzeug selbst festgelegt, sondern zentral von einem Managementsystem.

Nicht beschrieben ist, dass das Fahrzeug selbst die ihm zugewiesene Rampe sucht und sich automatisch an diese annähert. In der Praxis ist es nicht selten, dass 20 Rampen eng nebeneinanderliegen, sodass eine zugewiesene Rampe bei einer vollautomatisierten Lösung ohne eine zentrale Vorgabe aufwändig herauszusuchen ist. Wird dazu z.B. das maschinelle Lernen mithilfe von Mustererkennung verwendet, wird eine hohe Rechenleistung sowie eine große Datengrundlage benötigt. Zudem kann bei maschinellem Lernen anhand von Bildern in der Regel nur die Lage von Objekten im 2D-Bildraum wiedergegeben werden, wodurch sich Ungenauigkeiten ergeben können.

Gleiches gilt für einen autonomen Ankuppelvorgang an einen abgestellten Anhänger oder einen Rangiervorgang unter eine Wechselbrücke, bei denen der zugewiesene Anhänger bzw. die Wechselbrücke zunächst aufwändig zu identifizieren ist, bevor eine Annäherung stattfinden kann.

Soll ein Fahrzeug auf einem Betriebshof automatisiert fahren, so sind von einem Umgebungserfassungssystem entsprechende Muster zu erkennen, um Kollisionen mit anderen Objekten zu vermeiden. Meist kommen für die Erfassung der Umgebung zum Erkennen von Mustern Mono-Kameras oder Stereo-Kameras zum Einsatz. Weiterhin ist bekannt, wie mithilfe einer Mono-Kamera durch die Vorwärts- oder Rückwärtsbewegung eines Fahrzeugs, an dem die Mono-Kamera montiert ist, anhand photogrammetrischer Methoden die Struktur der Szene in 3D bestimmt werden kann (sog. Structure from Motion (SfM)).

In US2018/0204072A1 ist beispielsweise vorgesehen, Kameras an einem Anhänger eines Fahrzeug-Gespanns zu fixieren. Weiterhin sind Fahrdynamik-Sensoren vorgesehen, die Odometrie-Daten, die die Fahrzeugbewegung betreffen, ausgeben, beispielsweise eine Fahrzeuggeschwindigkeit. Die von der Kamera ausgegebenen Kamera-Daten werden mit den Odometrie-Daten abgeglichen, wobei die Odometrie-Daten für die Kompensation der Fahrzeugbewegung beim Verarbeiten der Kamera-Daten zum Erstellen von Bildern genutzt werden. Dabei können auch Kamera-Daten unterschiedlicher Kameras zusammengefügt werden.

In DE 10 2005 009 814 B4 ist vorgesehen, Kamera-Daten zusammen mit Odometrie-Daten, die von Raddrehzahlsensoren ausgegeben werden, zu verarbeiten, um eine Gierrate zu ermitteln. In DE 60 009 000 T2 ist weiterhin eine Bildverarbeitung unter Berücksichtigung von Odometrie-Daten des Fahrzeuges vorgesehen, um den Fahrer beim Einparken zu unterstützen. In DE 10 2015 105 248 A1 wird ein Bild von einer ersten Kamera zusammen mit einem Bild von einer zweiten Kamera in Verbindung mit Odometrie-Daten verarbeitet, wobei die Kameras an einem Anhänger und einem Zugfahrzeug eines mehrteiligen Fahrzeugs angeordnet sein können. Die Bilder, die die verschiedenen Kameras aufgenommen und in Form von Kamera-Daten ausgegeben haben, werden zusammengesetzt. Daraus wird ein kombiniertes Bild der Umgebung erzeugt, wobei in der Kurvenfahrt beispielsweise auch ein Knickwinkel berücksichtigt wird, der die Standpunkte der Kameras zueinander charakterisiert. Eine Vogelperspektive kann über das komplette mehrteilige Fahrzeug gelegt werden, um die Umgebung um das Fahrzeug anzuzeigen, um beispielsweise eine Einparkhilfe zu ermöglichen.

In WO 2016/164118 ist eine omnidirektionale Kamera vorgesehen, die Objekt-Punkte von Objekten in einer Umgebung des Fahrzeuges erfasst und in Abhängigkeit davon Kamera-Daten ausgibt. Mithilfe einer Steuereinrichtung im Fahrzeug werden die Kamera-Daten unter Einbezug aufgenommener Odometrie-Daten verarbeitet, wobei die Odometrie-Daten, z.B. von Raddrehzahl-Sensoren, Positions-Sensoren oder einem Lenkwinkel-Sensor, über den Datenbus des Fahrzeuges empfangen werden. Die Objekt-Punkte in der Umgebung des Fahrzeuges, die von Interesse sind, werden von der Kamera erkannt und anhand der Odometrie-Daten wird durch die Steuereinrichtung ein Abstand zu dem erfassten Objekt-Punkt zugeordneten Objekt ermittelt. Dafür wird über die eine Kamera eine Mehrzahl von Bildern aufgenommen, wobei die Bilder aus verschiedenen Standpunkten mit überlappenden Sichtfeldern aufgenommen sind. Durch das Verfolgen von Objektpunkten kann mittels Triangulation und Bündelausgleichung eine Tiefeninformation der Szene geschätzt werden. Die Kamera-Daten werden außerdem in Form von Bildern auf einem Display für den Fahrer dargestellt. Die Bilder sowie der ermittelte Abstand dienen dazu, das Rangieren eines PKW als Zugfahrzeug an einen Anhänger zu erleichtern, um diesen anzukuppeln. Weitere Objekte wie der Boden, Fußgänger, etc. können zwar erkannt werden, allerdings setzt dies eine ausreichende Bewegung des Fahrzeugs voraus, da nur auf diese Weise unterschiedliche Standpunkte für die Kamera eingestellt werden können.

Die DE102018210340A1 offenbart ein Verfahren zum Ermitteln einer Relativpose zwischen einem Zielobjekt und einem Fahrzeug, wobei das Fahrzeug eine an einem Fahrzeugheck angeordnete erste Erfassungseinrichtung zum Erfassen des Zielobjekts aufweist, umfassend ein Erfassen einer eine Frontseite des Zielobjekts kennzeichnende Markierung mit der ersten Erfassungseinrichtung, ein Erfassen einer eine Heckseite des Zielobjekts kennzeichnende Markierung mit der ersten Erfassungseinrichtung, ein Ermitteln eines Abstands zwischen dem Zielobjekt und dem Fahrzeug anhand einer ermittelten Größe zumindest einer der erfassten, das Zielobjekt kennzeichnenden Markierungen, ein Ermitteln eines Winkelversatzes zwischen dem Zielobjekt und dem Fahrzeug anhand eines ermittelten Lateralversatzes zwischen den erfassten, die Frontseite des Zielobjekts und die Heckseite des Zielobjekts kennzeichnenden Markierungen und ein Ermitteln einer Relativpose zwischen dem Zielobjekt und dem Fahrzeug auf Basis des ermittelten Abstands und des ermittelten Winkelversatzes.

Die US2005281436A1 offenbart ein Verfahren und eine zur Durchführung dieses Verfahrens geeignete Vorrichtung, bei welcher die in den Bilddaten eines Bildsensors potentiellen Zielobjekte detektiert und in einem mehrstufigen Ausschlussverfahren als mögliche Fahrziele identifiziert werden, worauf zumindest in Bezug auf das nächstliegende Fahrziel eine einen optimierten Fahrweg beschreibende Trajektorie berechnet wird.

Die EP2634070A1 ein Zielführungssystem für Kraftfahrzeuge für ein zielgenaues Heranfahren an ein stationäres Objekt, beispielsweise für Nutzfahrzeuge beim Rückwärtsandocken an eine Laderampe, einen Sattelauflieger, einen Anhänger oder dergleichen, mit wenigstens einer Kamera am Heck des Fahrzeugs zum Erfassen der rückwärtigen Fahrzeugumgebung und einer charakteristischen, positionsbestimmenden Markierung am anzufahrenden stationären Objekt, sowie mit einer elektronischen Bildverarbeitungseinrichtung.

Das Dokument XP054981867 mit dem Titel "Garage door detection
with OpenCV and Python" von Tanner Stokes vom 13. Februar 2015 (2015-02-13), Seite 1,
offenbart die Identifizierung eines Öffnungszustandes einer Garage mittels Markern an dem Garagentor.

Aufgabe der Erfindung ist, ein Verfahren zum Steuern eines Fahrzeuges auf einem Betriebshof anzugeben, mit dem ein dem Fahrzeug zugewiesenes Objekt mit geringem Aufwand identifiziert und lokalisiert werden kann und an das sich das Fahrzeug anschließend annähern kann. Aufgabe ist weiterhin, eine Fahrt-Steuereinheit sowie ein Fahrzeug anzugeben.

Diese Aufgabe wird durch ein Verfahren, eine Fahrt-Steuereinheit sowie ein Fahrzeug gemäß den unabhängigen Ansprüchen gelöst. Die Unteransprüche geben bevorzugte Weiterbildungen an.

Erfindungsgemäß ist also ein Verfahren zum Steuern eines Fahrzeuges auf einem Betriebshof mit mindestens den folgenden Schritten vorgesehen: - Zuweisen eines dreidimensionalen Ziel-Objektes, beispielsweise eine Rampe zum Beladen und/oder Entladen einer Fracht, einen abgestellten Anhänger, eine Wechselbrücke, einen Container oder ein Schüttgutablageplatz, zu dem Fahrzeug. Dies kann beispielsweise manuell durch einen Disponenten oder automatisiert durch ein Managementsystem erfolgen, die die Vorgänge in dem abgegrenzten Bereich überwachen bzw. steuern bzw. verwalten.

Das Verfahren umfasst weiterhin die Schritte:
- Erfassen eines dreidimensionalen Objektes in der Umgebung des Fahrzeuges und Ermitteln von Tiefen-Informationen des erfassten dreidimensionalen Objektes, wobei die Tiefen-Informationen das dreidimensionale Objekt räumlich charakterisieren.
- Klassifizieren des erfassten dreidimensionalen Objektes anhand der ermittelten Tiefen-Informationen und Prüfen, ob das ermittelte dreidimensionale Objekt dieselbe Objektklasse aufweist wie das zugewiesene dreidimensionale Ziel-Objekt.
- Identifizieren des erfassten dreidimensionalen Objektes, wenn das ermittelte dreidimensionale Objekt dieselbe Objektklasse aufweist wie das zugewiesene dreidimensionale Ziel-Objekt, durch Erfassen eines dem dreidimensionalen Objekt zugeordneten Objekt-Identifikators und Prüfen, ob der erfasste Objekt-Identifikator mit einem dem Ziel-Objekt zugeordneten Ziel-Identifikator übereinstimmt.
- Ausgeben eines Anfahr-Signals zum automatisierten oder manuellen Annähern des Fahrzeuges an das erfasste dreidimensionale Ziel-Objekt, wenn der Objekt-Identifikator mit dem Ziel-Identifikator übereinstimmt, wobei das Fahrzeug in Abhängigkeit des Anfahr-Signals vorzugsweise über ein Antriebssystem und/oder ein Bremssystem und/oder ein Lenksystem automatisiert oder manuell entlang einer vorgegebenen Trajektorie gesteuert wird zum Annähern an das dreidimensionale Ziel-Objekt.

Erfindungsgemäß ist vorgesehen, dass anhand der Tiefen-Information eine Objekt-Form und/oder eine Objekt-Kontur des erfassten dreidimensionalen Objektes ermittelt wird und dem erfassten dreidimensionalen Objekt in Abhängigkeit der Objekt-Form und/oder der Objekt-Kontur eine Objektklasse und/oder eine Pose, d.h. eine Position und eine Orientierung des dreidimensionalen Objektes relativ zum Fahrzeug, zugeordnet wird. Dadurch kann basierend auf der Triangulation oder der Auswertung der ortsaufgelösten Laufzeitmessung eine einfache Klassifizierung des erfassten dreidimensionalen Objektes erfolgen, so dass in einem ersten Schritt ohne viel Aufwand erkannt werden kann, ob es sich um ein relevantes Objekt handelt, das das Ziel-Objekt sein könnte, was durch die nachfolgende Identifikation geprüft wird. Über die Pose kann das jeweilige Objekt zudem genau lokalisiert werden, wobei die Pose beispielsweise durch einen modellbasierten Vergleich ermittelt werden kann, bei dem ein Modell eines dreidimensionalen Objektes mit der aus den ortsaufgelösten Tiefen-Informationen ermittelten Objekt-Form oder der Objekt-Kontur verglichen wird.

Vorteilhafterweise kann damit in mehreren Schritten vom Fahrzeug selbst geprüft werden, ob ein in der Umgebung befindliches dreidimensionales Objekt für eine Annäherung zugewiesen ist, wobei das dreidimensionale Objekt durch das Ermitteln der Tiefen-Informationen -mit wenig Aufwand sicher erkannt bzw. klassifiziert und anschließend auch einfach identifiziert und relativ zu dem Fahrzeug lokalisiert werden kann.

Dadurch kann der Annäherungsvorgang auf dem Betriebshof bei einer automatisierten bzw. autonomen Steuerung des Fahrzeuges vollautomatisiert durchgeführt werden oder bei einer manuellen Steuerung des Fahrzeuges zumindest unterstützt werden, ohne dass eine zentrale Vorgabe des Pfades zu erfolgen hat. Das Ziel des Fahrzeuges wird vielmehr bei einer automatisierten oder manuellen Fahrt über den Betriebshof ab einem bestimmten Punkt, z.B. in einem Bereich des betreffenden dreidimensionalen Objektes (Rampe, Wechselbrücke, etc.), automatisch selbst gesucht, wobei lediglich die Vorgabe bzw. die Zuweisung des Ziel-Objektes bzw. des Ziel-Identifikators nötig ist. Als automatisierte bzw. autonome Steuerung des Fahrzeuges wird dabei eine Steuerung ohne menschliches Zutun verstanden, d.h. eine Autonomiestufe von vier oder fünf, d.h. für die Steuerung ist keine Person im Fahrzeug nötig.

Als Betriebshof wird hierbei ein öffentliches, halb-öffentliches oder nichtöffentliches abgrenzbares Betriebsgelände verstanden, auf dem Fahrzeuge, insbesondere Nutzfahrzeuge, manuell oder automatisiert gesteuert werden, um beispielsweise eine Fracht aufzunehmen oder abzuladen. Ergänzend können auch abgestellte Anhänger angekuppelt oder abgestellt werden. Ein Betriebshof kann demnach beispielsweise Teil eines Supermarktes, eines Möbelhauses, einer Fabrikanlage, einem Hafen, eines Speditionsgeländes, eines Baumarktes, eines Zwischenlagers oder eines Firmengeländes sein.

Vorzugsweise ist weiterhin vorgesehen, dass das Erfassen eines dreidimensionalen Objektes in der Umgebung um das Fahrzeug über eine Mono-Kamera und/oder eine Stereo-Kamera erfolgt, wobei das Ermitteln von Tiefen-Informationen des erfassten dreidimensionalen Objektes durch Triangulation aus mindestens zwei aufgenommenen Bildern folgt, wobei die Bilder mit der Mono-Kamera und/oder der Stereo-Kamera aus mindestens zwei unterschiedlichen Standpunkten aufgenommen werden.

Demnach können unterschiedliche Methoden zur Anwendung kommen, um die Szene räumlich zu erfassen und zu bewerten. Bei der Verwendung einer Mono-Kamera ist dabei auf das sog. Structure-from-Motion Verfahren (SfM) zurückzugreifen, mit dem die Umgebung bzw. das betreffende Objekt von mindestens zwei unterschiedlichen Standpunkten aus aufgenommen wird, um durch Triangulation Tiefen-Informationen zu extrahieren.

Dabei kann vorzugsweise vorgesehen sein, dass die Mono-Kamera durch eine automatisiert gesteuerte Veränderung einer Fahrdynamik des gesamten Fahrzeuges und/oder durch ein Aktoriksystem in die mindestens zwei unterschiedlichen Standpunkte gebracht wird, wobei das Aktoriksystem die Mono-Kamera unabhängig von der Fahrdynamik des Fahrzeuges in die unterschiedlichen Standpunkte verstellen kann. Dadurch kann das SfM-Verfahren entweder durch die Fahrzeugbewegung selbst oder durch eine aktive Verstellung durchgeführt werden, wobei eine aktive Verstellung den Vorteil hat, dass die Tiefen-Informationen eines Objektes beispielsweise auch im Stillstand des Fahrzeuges extrahiert werden können. Als Aktoriksysteme kommen dabei beispielsweise ein die Kamera unmittelbar verstellbares Kamera-Verstellsystem, ein Luftfedersystem (ECAS), ein beliebiges Fahrwerk-Verstellsystem oder ein Komponenten-Verstellsystem (Fahrerkabine, Aerodynamik-Elemente, etc.) in Frage.

Gemäß einer alternativen oder ergänzenden Ausführungsform ist vorgesehen, dass das Erfassen eines dreidimensionalen Objektes in der Umgebung um das Fahrzeug über einen LIDAR-Sensor und/oder eine Time-of-Flight-Kamera und/oder eine Structured-Light-Kamera und/oder einen bildgebenden Radar-Sensor erfolgt, wobei das Ermitteln von Tiefen-Informationen des erfassten dreidimensionalen Objektes durch eine Laufzeitmessung von ausgesendeter elektromagnetischer Strahlung und reflektierter elektromagnetischer Strahlung erfolgt, mit der ein Erfassungsbereich des jeweiligen Sensors abgescannt wird. Damit kann nicht nur auf bildgebende Sensoren zurückgegriffen werden, um die Tiefen-Informationen für den Erkennungs- und Identifizierungsvorgang bereitzustellen, sondern auch auf Sensoren, die auf z.B. eine räumlich aufgelöste Distanzmessung durch Ermittlung des Laufzeitunterschiedes zwischen ausgesendeter und reflektierter Strahlung durchführen können. Dadurch kann das Verfahren auch flexibler bei unterschiedlichen Umgebungsbedingungen, z.B. bei Dunkelheit, eingesetzt werden.

Die Identifikation erfolgt vorzugsweise sensorisch, indem der Objekt-Identifikator durch einen Sensor erfasst wird. Dabei kann gemäß einer Variante vorgesehen sein, dass als Objekt-Identifikator
- eine 2D-Markierung, z.B. ein Buchstabe und/oder eine Zahl und/oder eine QR-Code und/oder ein Aruco-Marker, und/oder
- eine 3D-Markierung
erfasst wird, wobei sich die 2D-Markierung und/oder die 3D-Markierung auf oder benachbart zu dem erfassten dreidimensionalen Objekt befindet.

Damit kann in einfacher Weise über beispielsweise eine Mono-Kamera oder eine Stereo-Kamera ein dem Objekt zugeordneter Objekt-Identifikator erfasst werden, der anschließend mit dem Ziel-Identifikator verglichen werden kann.

Gemäß einer weiteren Variante kann vorgesehen sein, dass als Objekt-Identifikator ein Öffnungszustand eines Rampentores einer Rampe erfasst wird, wenn als dreidimensionales Objekt eine Rampe erfasst wird, und als Ziel-Identifikator für das Ziel-Objekt ein geöffnetes Rampentor vorgegeben werden kann. Demnach kann beispielsweise vom Disponenten oder von dem Managementsystem lediglich das Rampentor geöffnet werden, um dem Fahrzeug bzw. dem Fahrer die zugewiesene Rampe mitzuteilen.

Grundsätzlich können auch weitere Objekt-Identifikatoren zum Einsatz kommen, beispielsweise Bluetooth-Sender, Lampen, etc. über die eine Information entsprechend kodiert an das Fahrzeug oder den Fahrer übertragen werden kann, um festzustellen, ob es sich um das zugewiesene dreidimensionale Ziel-Objekt handelt.

In allen Fällen wird vorzugsweise angenommen, dass der Objekt-Identifikator mit dem Ziel-Identifikator übereinstimmt, wenn diese inhaltlich identisch sind bzw. diese dieselbe Information enthalten. So kann als Ziel-Identifikator beispielsweise eine Zahl oder ein Buchstabe zugewiesen werden, der dann in dem jeweiligen Objekt-Identifikator beispielsweise in einem QR-Code oder einem Aruco-Marker kodiert ist. Im Fahrzeug ist dann lediglich festzustellen, ob der Objekt-Identifikator mit dem Ziel-Identifikator inhaltlich bzw. von der übertragenen Information her übereinstimmt und damit auf das zugewiesene Ziel-Objekt hinweist.

Vorzugsweise ist weiterhin vorgesehen, dass eine Suchroutine durchgeführt wird, wenn der Objekt-Identifikator des erfassten dreidimensionalen Objektes nicht mit dem Ziel-Identifikator des zugewiesenen Ziel-Objektes übereinstimmt, wobei im Rahmen der Suchroutine sukzessive weitere dreidimensionale Objekte auf dem Betriebshof erfasst, klassifiziert und identifiziert und lokalisiert werden, bis der Objekt-Identifikator des erfassten dreidimensionalen Objektes mit dem Ziel-Identifikator des zugewiesenen Ziel-Objektes übereinstimmt. Damit kann das Fahrzeug bzw. der Fahrer selbst in einer einfach durchzuführenden Suchroutine das ihm zugewiesene Ziel-Objekt finden.

Vorzugsweise ist diesbezüglich weiterhin vorgesehen, dass das Fahrzeug im Rahmen der Suchroutine automatisiert und/oder manuell in eine Fahrtrichtung bewegt wird, um sukzessive weitere dreidimensionale Objekte zu erfassen, wobei die Fahrtrichtung in Abhängigkeit des erfassten Objekt-Identifikators, der nicht mit dem Ziel-Identifikator übereinstimmt, derartig festgelegt wird, dass in aufsteigender oder absteigender Rangfolge Objekt-Identifikatoren für dreidimensionale Objekte ermittelt werden, die sich an den Ziel-Identifikator annähern. Dadurch kann der zugewiesene Ziel-Identifikator bzw. das Ziel-Objekt in kontrollierter bzw. effizienter Weise gefunden werden.

Vorzugsweise ist weiterhin vorgesehen, dass das Fahrzeug nach dem Ausgeben des Anfahr-Signals zunächst automatisiert und/oder manuell zu einem Startpunkt der Trajektorie gesteuert wird. Demnach können zunächst eine Grobausrichtung bzw. ein Wendemanöver erfolgen, um das Fahrzeug in eine Position zu bringen, die ein kontrolliertes Annähern an das jeweilige Ziel-Objekt bzw. die Ermittlung einer Trajektorie dazu vereinfacht.

Vorzugsweise ist dabei vorgesehen, dass die Trajektorie und/oder der Startpunkt abhängig von der Objektklasse und/oder der Pose des dreidimensionalen Ziel-Objektes und abhängig von dem Fahrzeug, insbesondere eines angekuppelten Anhängers, ist. Bei der automatisierten und/oder manuellen Steuerung des Fahrzeuges wird demnach berücksichtigt, ob das Fahrzeug beispielsweise seitlich oder von hinten be- oder entladen wird, oder ob ein zweiteiliges Fahrzeug vorliegt. Damit wird der Annäherungsvorgang weiter optimiert. Bei zweiteiligen Fahrzeugen wird besonders berücksichtigt, um welche Anhängerart es sich in Kombination mit dem Zugfahrzeug handelt, z.B. Auflieger, Zentralachsanhänger oder Deichselanhänger bzw. Drehschemelanhänger.

Vorzugsweise ist weiterhin vorgesehen, dass die Trajektorie in Abhängigkeit einer dem dreidimensionalen Ziel-Objekt zugeordneten Linie vorgegeben wird. Einer Rampe können dabei beispielsweise ein oder zwei 90° auf die Rampe zulaufende Linien auf dem Untergrund zugeordnet sein, anhand derer eine Ausrichtung der Trajektorie erfolgen kann, um beispielsweise nicht in den Bereich benachbarter Rampen zu gelangen. Für einen Anhänger oder eine Wechselbrücke können zudem virtuelle Linien anhand der ermittelten Objekt-Kontur oder Objekt-Form zugeordnet werden, anhand derer die Trajektorie ausgerichtet wird, um den Annäherungsvorgang zu erleichtern.

In allen Ausführungsformen kann vorzugsweise vorgesehen sein, dass bei einer manuellen Steuerung des Fahrzeuges über eine Anzeigeeinrichtung Fahrt-Anweisungen in Abhängigkeit des Anfahr-Signals ausgegeben werden, um ein manuelles Annähern des Fahrzeuges an das dreidimensionale Ziel-Objekt zu ermöglichen. Die Steuerung des Fahrzeuges kann also auch beinhalten, dass der Fahrer in Abhängigkeit des Anfahr-Signals Anweisungen bekommt, wie er das Fahrzeug optimalerweise zu steuern hat. Dadurch kann der Fahrer nach Zuweisen eines Ziel-Objektes unabhängig von der verwendeten Sprache auf dem Betriebshof zu dem korrekten Objekt steuern.

Erfindungsgemäß ist weiterhin eine Fahrt-Steuereinheit vorgesehen, die insbesondere zur Durchführung des erfindungsgemäßen Verfahrens eingerichtet ist, wobei die Fahrt-Steuereinheit dazu ausgebildet ist, mindestens die folgenden Schritte durchzuführen:
- Erfassen eines dreidimensionalen Objektes in einer Umgebung um das Fahrzeug und Ermitteln von ortsaufgelösten Tiefen-Informationen des erfassten dreidimensionalen Objektes;
   - wobei anhand der ortsaufgelösten Tiefen-Information (TI) eine Objekt-Form (F12) und/oder eine Objekt-Kontur (C12) des erfassten dreidimensionalen Objektes (12) ermittelt wird und dem erfassten dreidimensionalen Objekt (12) in Abhängigkeit der Objekt-Form (F12) und/oder der Objekt-Kontur (C12) eine Objektklasse (Kn) und eine Pose (PE) relativ zum Fahrzeug zugeordnet wird;
   - wobei die Pose durch einen modellbasierten Vergleich ermittelt wird, bei dem ein Modell eines dreidimensionalen Objektes mit der aus den ortsaufgelösten Tiefen-Informationen ermittelten Objekt-Form oder der Objekt-Kontur verglichen wird und über die Pose das jeweilige Objekt lokalisiert wird;
- Klassifizieren des erfassten dreidimensionalen Objektes anhand der ermittelten ortsaufgelösten Tiefen-Informationen und Prüfen, ob das erfasste dreidimensionale Objekt dieselbe Objektklasse aufweist wie ein dem Fahrzeug zugewiesenes dreidimensionales Ziel-Objekt;
- Identifizieren des erfassten dreidimensionalen Objektes, wenn das dreidimensionale Objekt dieselbe Objektklasse aufweist wie das dreidimensionale Ziel-Objekt, durch Erfassen eines dem dreidimensionalen Objekt zugeordneten Objekt-Identifikators und Prüfen, ob der erfasste Objekt-Identifikator mit einem dem Ziel-Objekt zugeordneten Ziel-Identifikator übereinstimmt, und
- Ausgeben eines Anfahr-Signals zum automatisierten oder manuellen Annähern des Fahrzeuges an das erfasste dreidimensionale Ziel-Objekt, wenn der Objekt-Identifikator mit dem Ziel-Identifikator übereinstimmt. Vorzugsweise ist die Fahrt-Steuereinrichtung dabei ferner ausgebildet, eine Fahrdynamik des Fahrzeuges automatisiert zu beeinflussen, beispielsweise über ein Lenksystem und/oder ein Bremssystem und/oder ein Antriebssystem des Fahrzeuges.

Erfindungsgemäß ist weiterhin ein Fahrzeug mit einer erfindungsgemäßen Fahrt-Steuereinheit zum automatisierten oder manuellen Steuern des Fahrzeuges in Abhängigkeit eines Anfahr-Signals vorgesehen.

Die Erfindung wird im Folgenden anhand eines Ausführungsbeispiels näher erläutert. Es zeigen:
- Fig. 1: eine schematische Ansicht eines Betriebshofes mit einem Fahrzeug;
- Fig. 1a: eine Detailansicht einer Rampe auf dem Betriebshof gemäß Fig. 1;
- Fig. 1b: eine Detailansicht eines Anhängers auf dem Betriebshof gemäß Fig. 1;
- Fig. 1c: eine Detailansicht einer Wechselbrücke auf dem Betriebshof gemäß Fig. 1;
- Fig. 2a: ein von einer Mono-Kamera aufgenommenes Bild;
- Fig. 2b: die Aufnahme eines Objektpunktes mit einer Mono-Kamera aus unterschiedlichen Standpunkten; und
- Fig. 3: ein Flussdiagramm des erfindungsgemäßen Verfahrens.

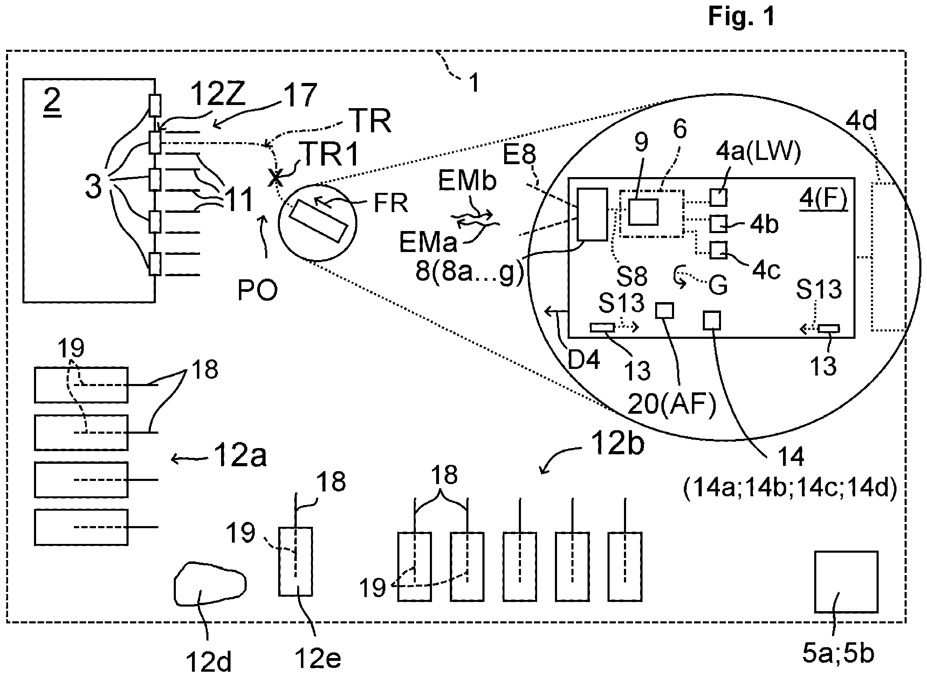

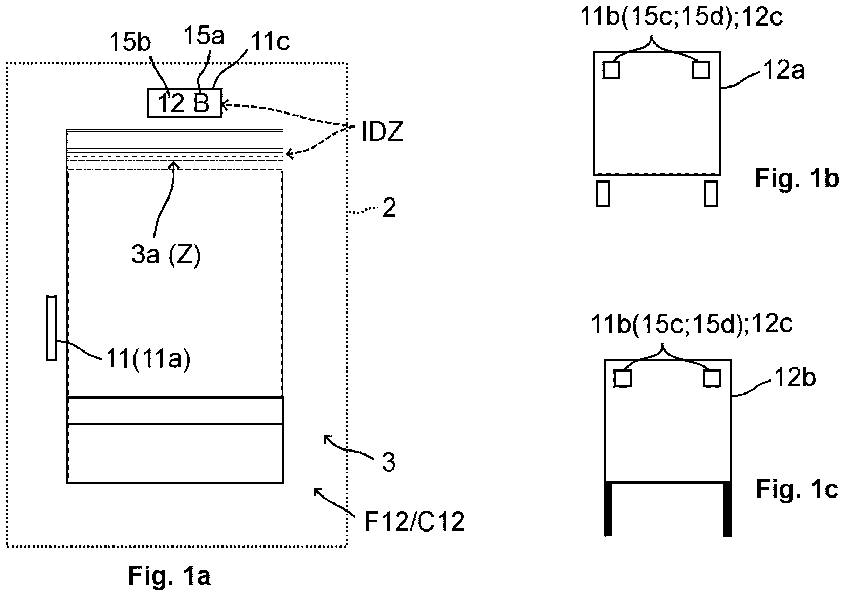

In Figur 1 ist schematisch ein Betriebshof 1 mit einem Gebäude 2 dargestellt, wobei das Gebäude 2 mehrere Rampen 3 zum Beladen und Entladen eines Fahrzeuges 4, insbesondere eines Nutzfahrzeuges, das ein oder mehrteilig (mit angekuppeltem/n Anhänger/n 4d) sein kann, aufweist. Ein auf dem Betriebshof 1 befindliches Fahrzeug 4 kann sich dabei automatisiert oder manuell gesteuert zu einer der Rampen 3 bewegen, um dort eine zu transportierende Fracht F aufzuladen und/oder eine transportierte Fracht F abzuladen.

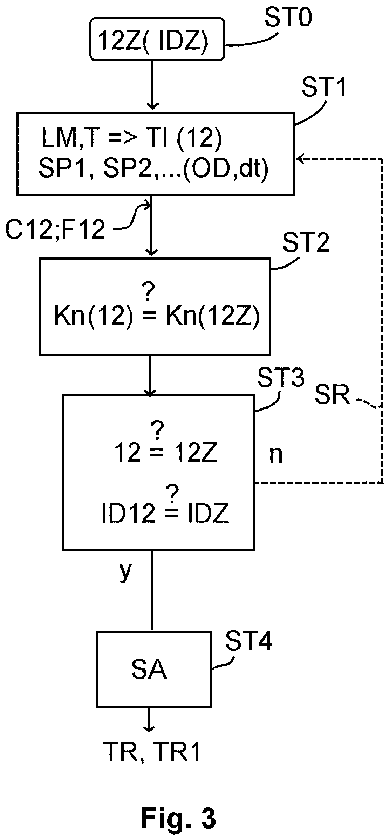

Die Steuerung des Fahrzeuges 4 zu den Rampen 3 wird dabei von einem dem Betriebshof 1 zugeordneten Managementsystem 5a oder einem Disponenten 5b in einem Initialisierungs-Schritt ST0 (s. Fig. 3) eingeleitet, wobei das Managementsystem 5a oder der Disponent 5b mit dem Fahrzeug 4 in beliebiger Weise zumindest einmalig vor dem oder nach dem Erreichen des Betriebshof 1 kommunizieren kann. Auch ein manuelles Einleiten der automatisierten Steuerung aus dem Fahrzeug 4 heraus ist möglich. Zur automatisierten Steuerung des Fahrzeuges 4 auf dem Betriebshof 1 weist dieses eine Fahrt-Steuereinheit 6 auf, die ausgebildet ist, eine Fahrdynamik D4 des Fahrzeuges 4 gezielt automatisiert zu beeinflussen, beispielsweise über ein Lenksystem 4a, ein Bremssystem 4b und ein Antriebssystem 4c. Die Fahrdynamik D4 kann aber entsprechend auch manuell von einem Fahrer beeinflusst werden, wobei dieser von der Fahrt-Steuereinrichtung 6 über eine Anzeigeeinrichtung 20 Fahrt-Anweisungen AF erhalten kann.

Außerdem kann sich das Fahrzeug 4 aber auch auf dem Betriebshof 1 befinden, um automatisiert oder manuell gesteuert an einen abgestellten Anhänger 12a anzukuppeln, unter eine Wechselbrücke 12b zu rangieren, an einen Schüttgutplatz 12d oder einen Container 12e zu fahren, was in entsprechender Weise ebenfalls vom Managementsystem 5a oder vom Disponenten 5b vorgegeben wird.

Weiterhin weist das Fahrzeug 4 ein Umgebungserfassungssystem 7 auf, das Sensoren 8, beispielsweise eine Mono-Kamera 8a, eine Stereo-Kamera 8b, vorzugsweise jeweils in Fish-Eye-Ausführung mit einem Bildwinkel von ca. 180°, und/oder einen Infrarot-Sensor 8c, einen LIDAR-Sensor 8d, eine Time-of-Flight-Kamera 8e, eine Structured-Light-Kamera 8f oder einen bildgebenden Radar-Sensor 8g, etc., sowie eine Auswerteeinheit 9 aufweist. Die Auswerteeinheit 9 ist in der Lage, aus von den Sensoren 8 ausgegebenen Sensor-Signalen S8 Objekte 10 in der Umgebung U um das Fahrzeug 4 zu erkennen. Als Objekte 10 können beispielsweise zweidimensionale Objekte 11, insbesondere Linien 11a, 2D-Markierungen 11b, Zeichen 11c, etc. oder dreidimensionale Objekte 12, beispielsweise eine Rampe 3, ein abgestellter Anhänger 12a, eine Wechselbrücke 12b, eine 3D-Markierung 12c, ein Schüttgutplatz 12d, ein Container 12e, etc., erkannt werden.

Durch entsprechende Auswerte-Algorithmen ist die Auswerteeinheit 9 dabei in der Lage, beispielsweise aus einem oder mehreren aus den Sensor-Signalen S8 generierten Bildern B, beispielsweise durch eine Linienerkennung die zweidimensionalen Objekte 11 zu erkennen oder durch eine Triangulation T die dreidimensionalen Objekte 12 zu extrahieren und dabei auch Tiefen-Informationen TI über das dreidimensionale Objekt 12 zu gewinnen. Dies ist insbesondere bei der Verwendung der Mono-Kamera 8a oder der Stereo-Kamera 8b der Fall.

Bei dem LIDAR-Sensor 8d, der Time-of-Flight-Kamera 8e, der Structured-Light-Kamera 8f sowie dem bildgebenden Radar-Sensor 8g hingegen erfolgt die Erkennung der dreidimensionalen Objekte 12 bzw. die Generierung von Tiefen-Informationen TI in der Auswerteeinheit 9 durch eine Laufzeitmessung LM zwischen ausgesendeter elektromagnetischer Strahlung EMa und reflektierter elektromagnetischer Strahlung EMb. Diese Laufzeitmessung LM wird dabei durch Abscannen eines bestimmten Erfassungsbereiches E8 des jeweiligen Sensors 8d, 8e, 8f, 8g mit der ausgesendeten elektromagnetischen Strahlung EMa durchgeführt, um die Tiefen-Informationen ortsaufgelöst erfassen zu können.

Die Erkennung von dreidimensionalen Objekten 12 wird im Rahmen des erfindungsgemäßen Verfahrens genutzt, um ein dem Fahrzeug 4 im Initialisierungs-Schritt ST0 zugewiesenes Ziel-Objekt 12Z auf dem Betriebshof 1 zu finden.

Dazu werden in einem ersten Schritt ST1 durch Aufnahme der Umgebung U mit einer Stereo-Kamera 8b mithilfe der Triangulation T Tiefen-Informationen TI zu einem erfassten dreidimensionalen Objekt 12 extrahiert. Alternativ (oder ergänzend dazu) können die Tiefen-Informationen TI aber auch mithilfe des LIDAR-Sensors 8d, der Time-of-Flight-Kamera 8e, der Structured-Light-Kamera 8f oder des bildgebenden Radar-Sensors 8g aus entsprechenden Laufzeitmessungen LM generiert werden. Über eine Mono-Kamera 8a können zudem mehrere Aufnahmen der Umgebung U gemacht und aus den mehreren Bildern B mit dem sog. Structure-from-Motion (SfM) Verfahren die benötigten Tiefen-Informationen TI extrahiert werden.

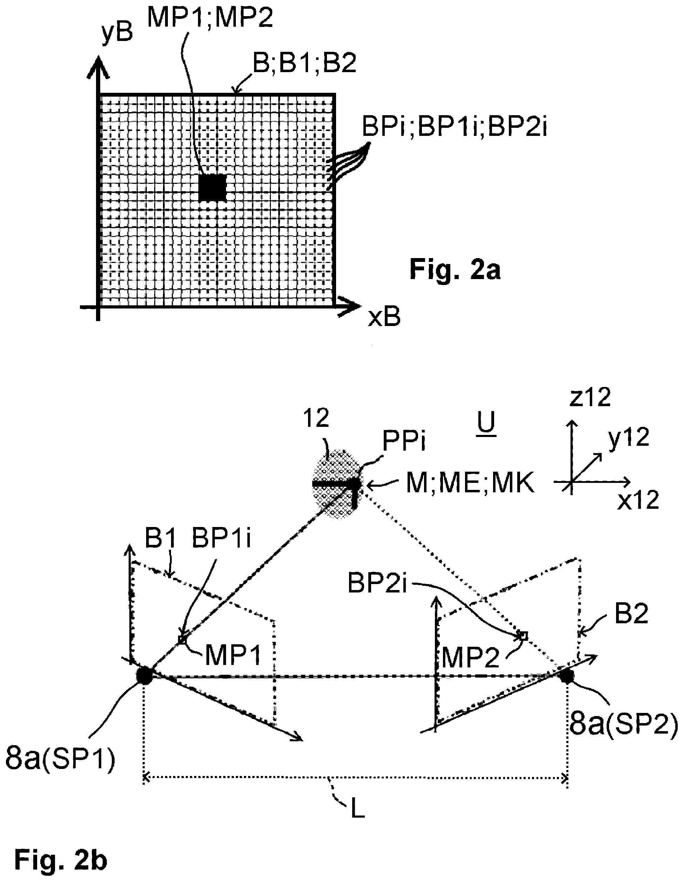

Für das SfM-Verfahren wird das betreffende dreidimensionale Objekt 12 von einer Mono-Kamera 8a von mindestens zwei unterschiedlichen Standpunkten SP1, SP2 aus aufgenommen (s. Fig. 2b). Durch Triangulation T können anschließend die Tiefen-Informationen TI bezüglich des dreidimensionalen Objektes 12 erhalten werden. Dabei werden Bildkoordinaten xB, yB zu mindestens einem ersten Bildpunkt BP1i in einem ersten Bild B1 und zu mindestens einem zweiten Bildpunkt BP2i in einem zweiten Bild B2 bestimmt, die jeweils demselben Objektpunkt PPi auf dem dreidimensionalen Objekt 12 zugeordnet sind.

Um den Prozess zu vereinfachen, können eine gewisse Anzahl an Bildpunkten BP1i, BP2i im jeweiligen Bild B1, B2 in einem Merkmalspunkt MP1, MP2 zusammengefasst werden (s. Fig. 2a), wobei die zusammenzufassenden Bildpunkte BP1i, BP2i derartig gewählt werden, dass der jeweilige Merkmalspunkt MP1, MP2 einem bestimmten eindeutig lokalisierbaren Merkmal M an dem dreidimensionalen Objekt 12 zugeordnet ist (s. Fig. 2b). Bei dem Merkmal M kann es sich beispielsweise um eine Ecke ME oder eine Kante MK am dreidimensionalen Objekt 12 handeln, die aus den gesamten Bildern B1, B2 jeweils extrahiert und deren Bildpunkte BP1i, BP2i in den Merkmalspunkten MP1, MP2 zusammengefasst werden können.

In einer Näherung kann aus den Bildkoordinaten xB, yB der einzelnen Bildpunkte BP1i, BP2i bzw. der Merkmalspunkte MP1, MP2, die in den mindestens zwei Bildern B1, B2 dem- oder denselben Objektpunkten PPi bzw. Merkmal M zugeordnet sind, durch Triangulation T eine Objektform F12 oder eine Objektkontur C12 zumindest abgeschätzt werden. Dazu können die Bildkoordinaten xB, yB mehrerer Bildpunkte BP1i, BP2i bzw. mehrerer Merkmalspunkte MP1, MP2 einer Triangulation T unterzogen werden.

Ohne die Kenntnis einer exakten Basislänge L, d.h. einem Abstand zwischen den unterschiedlichen Standpunkten SP1, SP2 der Mono-Kamera 8a, ergeben sich durch die Triangulation T unskalierte Objektkoordinaten x12, y12, z12 des dreidimensionalen Objektes 12 in der Umgebung U, die nicht den tatsächlichen Koordinaten im Raum entsprechen. Damit lässt sich aus derartig ermittelten unskalierten Objektkoordinaten x12, y12, z12 auch lediglich eine unskalierte Objektform F12 bzw. Objektkontur C12 herleiten, was aber für die Ermittlung der Form bzw. der Kontur des dreidimensionalen Objektes 12 ausreichend ist. Für die Triangulation T kann also zunächst eine beliebige Basislänge L angenommen werden.

Um die Triangulation T aber genauer zu gestalten und eine Ermittlung von skalierten Objektkoordinaten x12, y12, z12 und damit genaueren Tiefen-Informationen TI bezüglich des dreidimensionalen Objektes 12 zu ermöglichen, wird ergänzend die tatsächliche Basislänge L herangezogen. Sind gemäß Fig. 2b die relativen Positionen und damit die Basislänge L zwischen den unterschiedlichen Standpunkten SP1, SP2 der Mono-Kamera 8a, an denen die beiden Bilder B1, B2 aufgenommen wurden, bekannt bzw. wurden diese ermittelt, so können durch Triangulation T auch die absoluten, tatsächlichen Objektkoordinaten x12, y12, z12 (Weltkoordinaten) des dreidimensionalen Objektes 12 bzw. des Objektpunkts PPi bzw. des Merkmals M ermittelt werden. Daraus können aus geometrischen Betrachtungen eine Position und Orientierung, d.h. eine Pose, des Fahrzeuges 4 relativ zum dreidimensionalen Objekt 12 ermittelt werden.

Auf diese Weise kann von der Auswerteeinheit 9 eine gegenüber dem obigen Fall skalierte Objektkontur C12 bzw. skalierte Objektform F12 abgeschätzt werden, wenn die exakten Objektkoordinaten x12, y12, z12 von mehreren Objektpunkten PPi bzw. Merkmalen M ermittelt wird. Um die Tiefen-Informationen TI noch genauer zu ermitteln, kann ergänzend vorgesehen sein, dass mehr als zwei Bilder B1, B2 aufgenommen und durch Triangulation T wie oben beschrieben ausgewertet werden, und/oder ergänzend eine Bündelausgleichung durchgeführt wird.

Wie bereits beschrieben, ist das dreidimensionale Objekt 12 für das SfM-Verfahren aus mindestens zwei unterschiedlichen Standpunkten SP1, SP2 von der Mono-Kamera 8a zu betrachten, wie schematisch in Fig. 2b dargestellt. Dazu ist die Mono-Kamera 8a kontrolliert in die unterschiedlichen Standpunkte SP1, SP2 zu bringen und im skalierten Fall anhand von Odometrie-Daten OD zu ermitteln, welche Basislänge L sich zwischen den Standpunkten SP1, SP2 aus dieser Bewegung ergibt. Dazu können unterschiedliche Methoden zur Anwendung kommen:
Ist das gesamte Fahrzeug 4 in Bewegung, so ergibt sich bereits daraus eine Bewegung der Mono-Kamera 8a. Darunter ist zu verstehen, dass das Fahrzeug 4 in seiner Gesamtheit aktiv, beispielsweise durch das Antriebssystem 4c, oder passiv, beispielsweise durch ein Gefälle, in Bewegung versetzt wird. Werden während dieser Bewegung von der Mono-Kamera 8a mindestens zwei Bilder B1, B2 innerhalb eines zeitlichen Versatzes dt aufgenommen, lässt sich mithilfe von Odometrie-Daten OD, aus denen sich die Fahrzeugbewegung und damit auch die Kamerabewegung ableiten lässt, die Basislänge L ermitteln. Durch Odometrie werden also die beiden den Bildern B1, B2 zugeordneten Standpunkte SP1, SP2 ermittelt.

Als Odometrie-Daten OD können beispielsweise Raddrehzahl-Signale S13 von aktiven und/oder passiven Raddrehzahlsensoren 13 an den Rädern des Fahrzeuges 4 verwendet werden. Aus diesen kann in Abhängigkeit des zeitlichen Versatzes dt ermittelt werden, wie weit sich das Fahrzeug 4 bzw. die Mono-Kamera 8a zwischen den Standpunkten SP1, SP2 bewegt hat, woraus die Basislänge L folgt.

Es ist aber nicht zwangsläufig nur auf die Fahrzeug-Odometrie zurückzugreifen, d.h. die Bewertung der Fahrzeugbewegung anhand von Bewegungssensoren am Fahrzeug 4. Ergänzend oder alternativ kann auch auf eine visuelle Odometrie zurückgegriffen werden. Bei der visuellen Odometrie kann aus den Sensor-Signalen S8 der Mono-Kamera 8a bzw. aus Informationen in den erfassten Bildern B; B1, B2 eine Kameraposition fortlaufend ermittelt werden, insofern zumindest zu Beginn z.B. Objektkoordinaten x12, y12, z12 eines bestimmten Objektpunktes PPi bekannt sind. Die Odometrie-Daten OD können also auch eine Abhängigkeit von der derartig ermittelten Kameraposition enthalten, da daraus die Fahrzeugbewegung zwischen den beiden Standpunkten SP1, SP2 bzw. unmittelbar auch die Basislänge L abgeleitet werden kann.

Um die odometrische Bestimmung der Basislänge L bei einer Bewegung des Fahrzeuges 4 genauer zu machen, kann auf weitere im Fahrzeug 4 verfügbare Odometrie-Daten OD zurückgegriffen werden. Beispielsweise kann auf einen Lenkwinkel LW und/oder eine Gierrate G, die entsprechend sensorisch oder analytisch bestimmt werden, zurückgegriffen werden, um auch die Drehbewegung des Fahrzeuges 4 zu berücksichtigen.

Befindet sich das Fahrzeug 4 nicht in Bewegung oder ist die Bewegung innerhalb des zeitlichen Versatzes dt so gering, dass die Odometrie-Daten OD so ungenau sind, dass eine zuverlässige Ermittlung der Basislänge L damit nicht möglich ist, kann die Mono-Kamera 8a auch durch ein aktives Aktoriksystem 14 in Bewegung versetzt werden. Die Bewegung der Mono-Kamera 8a, die durch das Aktoriksystem 14 bewirkt wird, unterscheidet sich von der bisher betrachteten Bewegung des Fahrzeuges 4 insbesondere dadurch, dass durch das Aktoriksystem 14 lediglich die Mono-Kamera 8a oder ein mit der Mono-Kamera 8a verbundener Fahrzeugabschnitt in Bewegung versetzt wird. Die Bewegung des Fahrzeuges 4 in seiner Gesamtheit wird dadurch also nicht verändert, so dass ein stillstehendes Fahrzeug 4 bei einer aktiven Ansteuerung des Aktoriksystems 14 weiterhin im Stillstand verbleibt.

Bei einer Ansteuerung des Aktoriksystems 14 wird die Mono-Kamera 8a also unmittelbar oder mittelbar bewegt und dadurch an unterschiedliche Standpunkte SP1, SP2 gebracht, so dass die Umgebung U in mindestens zwei unterschiedlichen Bildern B1, B2 abgebildet werden kann. Damit kann das SfM-Verfahren wie oben beschrieben ausgeführt werden. Als Aktoriksysteme 14 kommen unterschiedliche Systeme im Fahrzeug 4 in Betracht. Beispielsweise kann die Mono-Kamera 8a an einem Kamera-Verstellsystem 14a angeordnet sein. In dem Fall kann die Mono-Kamera 8a in die unterschiedlichen Standpunkte SP1, SP2 gebracht werden, indem Stellmotor(en), Pneumatikzylinder, Hydraulikzylinder, Servozylinder oder vergleichbar wirkende Aktoren bei Betätigung um einen bestimmten Verstellweg verstellt werden.

Eine weitere Möglichkeit für ein aktives Aktoriksystem 14 ist ein aktives Luftfedersystem 14b (ECAS, Electronically Controlled Air Suspension), das in einem Fahrzeug 4 über als Federbälge ausgeführte Luftfedern dafür sorgt, dass ein Fahrzeugaufbau gegenüber den Fahrzeugachsen des Fahrzeuges 4 höhenverstellt wird, d.h. angehoben oder abgesenkt wird. Ist die Mono-Kamera 8a an dem Fahrzeugaufbau des Fahrzeuges 4 angeordnet, so kann durch eine gezielte Ansteuerung des aktiven Luftfedersystems 14b eine Höhenverstellung der Mono-Kamera 8a bewirkt werden, um diese an zwei unterschiedlichen Standpunkten SP1, SP2 zu positionieren.

Daneben kann als weiteres aktives Aktoriksystem 14 aber auch jedes vergleichbar wirkende aktive Fahrwerk-Verstellsystem 14c verwendet werden, das in der Lage ist, eine Höhenverstellung des Fahrzeugaufbaus des Fahrzeuges 4 durchzuführen und damit die daran angeordnete Mono-Kamera 8a gezielt an zwei unterschiedlichen Standpunkten SP1, SP2 zu positionieren. Auch ein Komponenten-Verstellsystem 14d ist möglich, das lediglich einen Teil bzw. eine Komponente des Fahrzeugaufbaus, an dem die Mono-Kamera 8a befestigt ist, beispielsweise ein Führerhaus, anheben oder absenken kann. Als weitere Komponenten kommen beispielsweise auch Aerodynamik-Komponenten, beispielsweise Aerodynamik-Flügel oder Spoiler in Betracht, an denen eine Mono-Kamera 8a montiert werden kann und die aktiv verstellt werden können, um die Mono-Kamera 8a gezielt zu verstellen.

Damit gibt es eine Reihe von Möglichkeiten, die Mono-Kamera 8a aktiv und gezielt an unterschiedlichen Standpunkten SP1, SP2 zu positionieren, um mindestens zwei Bilder B1, B2 von einem dreidimensionalen Objekt 12 aufzunehmen und daraus die jeweilige Tiefen-Information TI (skaliert oder unskaliert) für ein oder mehrere Objektpunkte PPi zu ermitteln, aus denen anschließend eine skalierte oder unskalierte Objektkontur C12 oder Objektform F12 hergeleitet werden kann.

In einem zweiten Schritt ST2 des erfindungsgemäßen Verfahrens erfolgt anschließend anhand der skalierten oder unskalierten Objektkontur C12 oder Objektform F12 eine Klassifizierung des erfassten dreidimensionalen Objektes 12 in eine bestimmte Objektklasse Kn und/oder einer Ermittlung einer Pose PO, d.h. einer Position und Orientierung des Fahrzeuges 4 relativ zu dem Objekt 12. Durch einen Vergleich mit bekannten Objekten kann dadurch beispielsweise erkannt werden, ob von der Mono-Kamera 8a eine Rampe 3, ein abgestellter Anhänger 12a, eine Wechselbrücke 12b, ein Schüttgutplatz 12d, ein Container 12e, etc. aufgenommen wurde und/oder wie diese relativ zum Fahrzeug 4 lokalisiert sind.

Entsprechend kann diese Klassifizierung, Lokalisierung und Erkennung auch bei einer Aufnahme der Umgebung U mit einer Stereo-Kamera 8b erfolgen, wobei auch aus diesen stereoskopischen Aufnahmen bzw. Bildern B in analoger Weise durch Triangulation T eine Objektkontur C12 oder Objektform F12 hergeleitet werden kann. Aber auch aus den Sensor-Signalen S8 des LIDAR-Sensors 8d, der Time-of-Flight-Kamera 8e, der Structured-Light-Kamera 8f oder des bildgebenden Radar-Sensors 8g kann durch eine Auswertung der Laufzeitmessung LM der jeweiligen elektromagnetischen Strahlung EMa, EMb eine Objektkontur C12 oder eine Objektform F12 hergeleitet werden, anhand derer ein dreidimensionales Objekt 12 klassifiziert, lokalisiert und erkannt werden kann.

Ist ein dreidimensionales Objekt 12 in dieser Weise in einer Objektklasse Kn klassifiziert worden, in der auch das Ziel-Objekt 12Z zu klassifizieren ist, so folgt in einem dritten Schritt ST3 eine Identifizierung des dreidimensionalen Objektes 12 und eine Prüfung, ob dieses erkannte dreidimensionale Objekt 12 das Ziel-Objekt 12Z ist, das dem Fahrzeug 4 beispielsweise vom Managementsystem 5a oder vom Disponenten 5b zugewiesen wurde. Dies dient der Feststellung, ob das Fahrzeug 4 an dem dreidimensionalen Objekt 12 die ihm zugeordnete Aufgabe durchführen kann bzw. darf, d.h. eine Fracht F an einer bestimmten Rampe 3 aufzuladen oder abzuladen, an einen bestimmten abgestellten Anhänger 12a anzukuppeln, unter eine bestimmte Wechselbrücke 12b zu rangieren oder an einen Schüttgutplatz 12d oder einen Container 12e heranzufahren, etc..

Dazu wird nach der Erkennung und Klassifizierung des dreidimensionalen Objektes 12 geprüft, ob diesem ein bestimmter Objekt-Identifikator ID12 zugeordnet ist, wobei der Objekt-Identifikator ID12 unterschiedlich umgesetzt sein kann. Im Allgemeinen ist der Objekt-Identifikator ID12 derartig auszuführen, dass vom Fahrzeug 4 aus feststellbar ist, ob das dreidimensionale Objekt 12, das über den Objekt-Identifikator ID12 identifiziert werden kann, dem zugewiesenen Ziel-Objekt 12Z entspricht, das über einen entsprechenden Ziel-Identifikator IDZ zu identifizieren ist.

Dazu kann mithilfe des Umgebungserfassungssystems 7 anhand der Sensor-Signale S8 beispielsweise geprüft werden, ob sich an oder benachbart zu dem jeweiligen dreidimensionalen Objekt 12 als zweidimensionales Objekt 11 z.B. eine 2D-Markierung 11b, beispielsweise in Form von Buchstaben 15a, Zahlen 15b, QR-Codes 15c, Aruco-Markern 15d, etc. oder als dreidimensionales Objekt 12 eine 3D-Markierung 12c, z.B. ein sphärischer Marker, als Objekt-Identifikator ID12 befindet. Dies kann durch eine Bildverarbeitung erfolgen. Wurde eine derartige 2D-Markierung 11b oder 3D-Markierung 12c erkannt, so kann diese mit dem Ziel-Identifikator IDZ verglichen werden, der dem Fahrzeug 4 z.B. vom Managementsystem 5a oder vom Disponenten 5b übermittelt wurde. So kann geprüft werden, ob dem Fahrzeug 4 das erkannte dreidimensionale Objekt 12 auf dem Betriebshof 1 als Ziel-Objekt 12Z zugewiesen wurde oder nicht.

Alternativ kann mithilfe des Umgebungserfassungssystems 7 im Falle einer erkannten Rampe 3 als dreidimensionales Objekt 12 auch ein Öffnungszustand Z der Rampe 3 als Objekt-Identifikator ID12 geprüft werden. Demnach kann der Managementsystem 5a oder vom Disponenten 5b bei Ankunft des Fahrzeuges 4 auf dem Betriebshof 1 auch ein Rampentor 3a einer Rampe 3 automatisch öffnen und dem Fahrzeug 4 dadurch eine Rampe 3 zuweisen. Der Ziel-Indikator IDZ ist in dem Fall also ein offenes Rampentor 3a. Dies kann von dem Umgebungserfassungssystem 7 erfasst und z.B. anhand der von der Mono-Kamera 8a oder der Stereo-Kamera 8b aufgenommenen Bilder B durch Triangulation T oder anhand der durchgeführten Laufzeitmessung LM über den LIDAR-Sensor 8d, die Time-of-Flight-Kamera 8e, die Structured-Light-Kamera 8f oder den bildgebenden Radar-Sensor 8g erkannt werden, da ein offenes Rampentor 3a andere Tiefen-Informationen TI hervorbringt als ein geschlossenes Rampentor 3a.

War die Identifizierung nicht erfolgreich, d.h. wurde keine Rampe 3 bzw. kein abgestellter Anhänger 12a bzw. keine Wechselbrücke 12b bzw. kein Schüttgutplatz 12d bzw. kein Container 12e erkannt, die dem Fahrzeug 4 vom Managementsystem 5a oder vom Disponenten 5b zugewiesen wurde, wird zunächst eine zwischengeschaltete Suchroutine SR (Fig. 3) durchgeführt. Diese kann wie folgt aufgebaut sein:
Wurde anhand des Objekt-Identifikators ID12 erkannt, dass das erkannte dreidimensionale Objekt 12, d.h. die Rampe 3 oder der Anhänger 12a oder die Wechselbrücke 12b oder der Schüttgutplatz 12d oder der Container 12e, nicht das zugewiesene dreidimensionale Ziel-Objekt 12Z ist, werden benachbarte dreidimensionale Objekte 12 auf dem Betriebshof 1 auf dieselbe Weise wie oben beschrieben in den Schritten ST1 und ST2 ausgewertet und für diese gemäß dem dritten Schritt ST3 geprüft, ob der Objekt-Identifikator ID12 dem Ziel-Indikator IDZ entspricht.

Dazu fährt das Fahrzeug 4 automatisiert oder manuell gesteuert in eine bestimmte Fahrtrichtung FR entlang des Betriebshofes 1, um die benachbarten dreidimensionalen Objekte 12 sukzessive über das Umgebungserfassungssystem 7 erfassen zu können, bis das zugewiesene dreidimensionale Ziel-Objekt 12Z mit dem jeweiligen Ziel-Identifikator IDZ erfasst wird. Die Fahrtrichtung FR des Fahrzeuges 4 kann dabei anhand des erfassten Objekt-Identifikators ID12 festgelegt werden, um auf möglichst effiziente Weise zum jeweils zugewiesenen dreidimensionalen Ziel-Objekt 12Z zu gelangen.

Wurde im dritten Schritt ST3 beispielsweise ein Objekt-Identifikator ID12 ermittelt, der eine geringere Rangfolge als der zugewiesene Ziel-Identifikator IDZ aufweist, so wird das Fahrzeug 4 automatisiert oder manuell in eine Fahrtrichtung FR bewegt, in der auch der Objekt-Identifikator ID12 ansteigt, insofern eine Rangfolge für den Objekt-Identifikator ID12 festgestellt werden kann. Demnach wird das Fahrzeug 4 derartig gesteuert, dass sich dieses beispielsweise in Richtung zu größeren Zahlenwerten bzw. hin zu höheren Buchstaben"werten" auf den Objekt-Identifikatoren ID12 bewegt. Durch Beobachtung des Objekt-Identifikators ID12 kann dabei schnell erkannt werden, ob in die richtige Fahrtrichtung FR gesteuert wird. Zur Plausibilisierung kann gezählt werden, ob die Reihenfolge der Zahlen 15b oder Buchstaben 15a stimmt. Hieraus kann abgeschätzt werden, wie weit noch zu fahren ist, bis das zugewiesene Ziel-Objekt 12Z, z.B. die zugewiesene Rampe 3 oder der zugewiesen Anhänger 12a oder die zugewiesene Wechselbrücke 12b oder der zugewiesene Schüttgutplatz 12d oder der zugewiesene Container 12e erreicht wird.

Entsprechend gilt dies für den entgegengesetzten Fall, dass für das erkannte dreidimensionale Objekt 12 ein Objekt-Identifikator ID12 ermittelt wird, der eine höhere Rangfolge als der zugewiesene Ziel-Identifikator IDZ aufweist. In entsprechender Weise ist dann die entgegengesetzte Fahrtrichtung FR zu wählen.

Bei einer manuellen Steuerung des Fahrzeuges 4 können über die Anzeigeeinrichtung 20 Fahrt-Anweisungen AF, insbesondere die Fahrtrichtung, gegeben werden, um die Suchroutine SR durchzuführen.

Die Durchführung der vorangegangenen Schritte ST0, ST1, ST2, ST3 sowie der Suchroutine SR kann in der Fahrt-Steuereinheit 6 stattfinden, die als eigenständige Steuereinheit ausgeführt sein kann oder Bestandteil der Auswerteeinheit 9 ist oder die die Auswerteeinheit 9 mitumfasst oder mit dieser Signale austauscht. Die Fahrt-Steuereinheit 6 kann auch Bestandteil weiterer funktionaler Einheiten im Fahrzeug 4 sein oder diese mit aufnehmen.

Nach erfolgreicher Ermittlung des zugewiesenen dreidimensionalen Ziel-Objektes 12Z wird in einem nachfolgenden vierten Schritt ST4 ein Anfahr-Signal SA in der Fahrt-Steuereinrichtung 6 generiert, in Abhängigkeit dessen das Fahrzeug 4 gezielt entlang einer vorgegebenen Trajektorie TR an das jeweils zugewiesene dreidimensionale Ziel-Objekt 12Z rangiert wird. Dies kann automatisiert oder manuell gesteuert erfolgen. Bei einer manuellen Steuerung des Fahrzeuges 4 werden dem Fahrer dabei über die Anzeigeeinrichtung 20 Fahrt-Anweisungen AF in Abhängigkeit des Anfahr-Signals SA ausgegeben, so dass dieser der Trajektorie TR folgen kann, um ein manuelles Annähern des Fahrzeuges 4 an das dreidimensionale Ziel-Objekt 12Z zu ermöglichen.

Die Trajektorie TR kann hierbei gemäß Fig. 1 einen Startpunkt TR1 aufweisen, an den das Fahrzeug 4 in einer bestimmten Orientierung nach erfolgreicher Identifizierung im Schritt ST3 zunächst rangiert wird. Dieser Startpunkt TR1 ist insbesondere abhängig von der Objektklasse Kn und/oder auch der ermittelten Pose PO des dreidimensionalen Ziel-Objekts 12Z sowie auch abhängig vom Fahrzeug 4, insbesondere eines angekuppelten Anhängers, selbst. Auch die Trajektorie TR ist abhängig von der Art des jeweiligen dreidimensionalen Ziel-Objektes 12Z und dessen Pose PO und auch abhängig vom Fahrzeug 4, insbesondere eines angekuppelten Anhängers 4a, selbst. Sowohl die Trajektorie TR als auch der Start-Punkt TR1 werden von der Fahrt-Steuereinrichtung 6 festgelegt.

Der Startpunkt TR1 und/oder die Trajektorie TR können bei einer Rampe 3 als dreidimensionales Ziel-Objekt 12Z in Abhängigkeit eines zweidimensionalen Objektes 11 gewählt sein, das der Rampe 3 eindeutig zugeordnet ist. Dies können beispielsweise ein, zwei oder mehrere Linien 11a auf dem Untergrund 17 vor der Rampe 3 (Fig. 1) oder seitlich der Rampe 3 auf dem Gebäude 2 (s. Fig. 1a) sein. Aus den Bildern B der Mono-Kamera 8a oder der Stereo-Kamera 8b kann beispielsweise ermittelt werden, ob diese Linien 11a mit der Rampe 3 im 90° Winkel fluchten, so dass darüber ein Startpunkt TR1 festgelegt werden kann. Auch aus den Sensor-Signalen S8 des LIDAR-Sensors 8d, der Time-of-Flight-Kamera 8e, der Structured-Light-Kamera 8f oder des bildgebenden Radar-Sensors 8g können diese Informationen erhalten werden. Aber auch die Trajektorie TR kann in Abhängigkeit der Lage dieser Linien 11a festgelegt werden, so dass eine manuelle oder automatisierte Orientierung anhand dieser Linien 11a beim Annäherungsvorgang erfolgen kann.

Aus den Bildern B der Mono-Kamera 8a (SfM-Verfahren) oder aus den Bildern der Stereo-Kamera 8b (Triangulation T) oder aus den Sensor-Signalen S8 des LIDAR-Sensors 8d, der Time-of-Flight-Kamera 8e, der Structured-Light-Kamera 8f oder des bildgebenden Radar-Sensors 8g (Laufzeitmessung LM) kann dann eine Position oder eine Orientierung oder beides, d.h. die Pose PO, der Rampe 3 relativ zum Fahrzeug 4 ständig ermittelt werden, so dass für das Fahrzeug 4 eine geeignete Trajektorie TR ermittelt werden kann, auf der sich das Fahrzeug 4 automatisiert oder manuell der Rampe 3 annähern kann.

Vergleichbar kann ein Startpunkt TR1 und eine Trajektorie TR für das Anfahren an einen Anhänger 12a oder unter eine Wechselbrücke 12b oder an einen Schüttgutplatz 12d oder einen Container 12e als Ziel-Objekt 12Z erfolgen, wobei in dem Fall statt den Linien 11a zur Orientierung eine virtuelle Linie 18 (s. Fig. 1) ermittelt werden kann, die beispielsweise eine Verlängerung einer Mittenachse 19 des Anhängers 12a oder der Wechselbrücke 12b oder des Schüttgutplatzes 12d oder des Containers 12e darstellt oder die parallel zur jeweiligen Mittenachse 19 liegt. Anhand dieser kann dann der Anfahrvorgang ausgehend von einer bestimmten Startposition TR1 entlang einer festgelegten Trajektorie TR erfolgen.

### Bezugszeichenliste (Teil der Beschreibung)

- 1: Betriebshof
- 2: Gebäude
- 3: Rampe
- 3a: Rampentor
- 4: Fahrzeug
- 4a: Lenksystem
- 4b: Bremssystem
- 4c: Antriebssystem
- 4d: angekuppelter Anhänger
- 5a: Managementsystem
- 5b: Disponent
- 6: Fahrt-Steuereinheit
- 7: Umgebungserfassungssystem
- 8: Sensor
- 8a: Mono-Kamera
- 8b: Stereo-Kamera
- 8c: Infrarot-Sensor
- 8d: LIDAR-Sensor
- 8e: Time-of-Flight-Kamera
- 8f: Structured-Light-Kamera
- 8g: bildgebender Radar-Sensor
- 9: Auswerteeinheit
- 10: Objekt
- 11: zweidimensionales Objekt
- 11a: Linien
- 11b: 2D-Markierungen
- 11c: Zeichen
- 12: dreidimensionales Objekt
- 12a: abgestellter Anhänger
- 12b: Wechselbrücke
- 12c: 3D-Markierung
- 12d: Schüttgutplatz
- 12e: Container
- 12Z: Ziel-Objekt
- 13: Raddrehzahlsensor
- 14: Aktoriksystem
- 14a: Kamera-Verstellsystem
- 14b: Luftfedersystem
- 14c: Fahrwerk-Verstellsystem
- 14d: Komponenten-Verstellsystem
- 15a: Buchstabe
- 15b: Zahl
- 15c: QR-Code
- 15d: Aruco-Marker
- 17: Untergrund
- 18: virtuelle Linie
- 19: Mittenachse
- 20: Anzeigeeinrichtung
- AF: Fahrt-Anweisung
- B: Bild
- B1: erstes Bild
- B2: zweites Bild
- BP1i: erster Bildpunkt
- BP2i: zweiter Bildpunkt
- C12: Objekt-Kontur
- D4: Fahrdynamik des Fahrzeuges 4
- dt: zeitlicher Versatz
- E8: Erfassungsbereich des Sensors 8
- EMa: ausgesendete elektromagnetische Strahlung
- EMb: reflektierte elektromagnetische Strahlung
- F: Fracht
- F12: Objektform
- FR: Fahrtrichtung
- G: Gierrate
- ID12: Objekt-Identifikator
- IDZ: Ziel-Identifikator
- Kn: Objektklasse
- L: Basislänge
- LM: Laufzeitmessung
- M: Merkmal
- ME: Ecke
- MK: Kante
- MP1, MP2: Merkmalspunkt
- OD: Odometrie-Daten
- PO: Pose
- PPi: Objektpunkt auf dem dreidimensionalen Objekt 12
- S8: Sensor-Signal
- S13: Raddrehzahl-Signal
- SA: Anfahr-Signal
- SP1, SP2: erster, zweiter Standpunkt der Mono-Kamera 8a
- SR: Suchroutine
- T: Triangulation
- TR: Trajektorie des Fahrzeuges 4
- TR1: Startpunkt der Trajektorie TR
- TI: Tiefen-Information
- U: Umgebung
- xB, yB: Bildkoordinaten
- x11, y12, z12: Objektkoordinaten
- Z: Öffnungszustand des Rampentores 3a
- ST0, ST1, ST2, ST3, ST4: Schritte des Verfahrens

## Patentansprüche

1. Verfahren zum Steuern eines Fahrzeuges (4) auf einem Betriebshof (1), mit mindestens den folgenden Schritten:
- Zuweisen eines dreidimensionalen Ziel-Objektes (12Z) zu dem Fahrzeug (4) (ST0);
- Erfassen eines dreidimensionalen Objektes (12) in der Umgebung (U) um das Fahrzeug (4) und Ermitteln von ortsaufgelösten Tiefen-Informationen (TI) des erfassten dreidimensionalen Objektes (12) (ST1);
- wobei anhand der Tiefen-Information (TI) eine Objekt-Form (F12) und/oder eine Objekt-Kontur (C12) des erfassten dreidimensionalen Objektes (12) ermittelt wird und dem erfassten dreidimensionalen Objekt (12) in Abhängigkeit der Objekt-Form (F12) und/oder der Objekt-Kontur (C12) eine Objektklasse (Kn) und eine Pose (PE) relativ zum Fahrzeug zugeordnet wird, wobei das erfasste dreidimensionale Objekt (12) über eine Pose (PE) lokalisiert wird und wobei die Pose (PE) des erfassten dreidimensionalen Objektes (12) durch einen modellbasierten Vergleich ermittelt wird, bei dem ein Modell des erfassten dreidimensionalen Objektes (12) mit der Objekt-Form und/oder der Objekt-Kontur des erfassten dreidimensionalen Objektes (12) verglichen wird;
- Klassifizieren des erfassten dreidimensionalen Objektes (12) anhand der ermittelten Tiefen-Informationen (TI) und Prüfen, ob das erfasste dreidimensionale Objekt (12) dieselbe Objektklasse (Kn) aufweist wie das dreidimensionale Ziel-Objekt (12Z) (ST2);
- Identifizieren des erfassten dreidimensionalen Objektes (12), wenn das erfasste dreidimensionale Objekt (12) dieselbe Objektklasse (Kn) aufweist wie das dreidimensionale Ziel-Objekt (12Z), durch Erfassen eines dem dreidimensionalen Objekt (12) zugeordneten Objekt-Identifikators (ID12) und Prüfen, ob der Objekt-Identifikator (ID12) mit einem dem Ziel-Objekt (12Z) zugeordneten Ziel-Identifikator (IDZ) übereinstimmt (ST3);
- Ausgeben eines Anfahr-Signals (SA) zum automatisierten oder manuellen Annähern des Fahrzeuges (4) an das erfasste dreidimensionale Ziel-Objekt (12Z), wenn der Objekt-Identifikator (ID12) mit dem Ziel-Identifikator (IDZ) übereinstimmt.

2. Verfahren nach Anspruch 1, **dadurch gekennzeichnet, dass** das dreidimensionale Ziel-Objekt (12Z) eine Rampe (3) zum Beladen oder Entladen einer Fracht (F) oder ein abgestellter Anhänger (12a) oder eine Wechselbrücke (12b) oder ein Schüttgutplatz (12d) oder ein Container (12e) ist.

3. Verfahren nach Anspruch 1 oder 2, **dadurch gekennzeichnet, dass** das Erfassen eines dreidimensionalen Objektes (12) in der Umgebung (U) um das Fahrzeug (4) über mindestens eine Mono-Kamera (8a) und/oder mindestens eine Stereo-Kamera (8b) erfolgt, wobei das Ermitteln von Tiefen-Informationen (TI) des erfassten dreidimensionalen Objektes (12) durch Triangulation (T) aus mindestens zwei aufgenommenen Bildern (B) erfolgt, wobei die Bilder (B) mit der Mono-Kamera (8a) und/oder mit der Stereo-Kamera (8b) aus mindestens zwei unterschiedlichen Standpunkten (SP1, SP2) aufgenommen werden.

4. Verfahren nach Anspruch 3, **dadurch gekennzeichnet, dass** die Mono-Kamera (8a) und/oder mindestens eine Stereo-Kamera (8b) durch eine automatisiert gesteuerte Veränderung einer Fahrdynamik (D4) des gesamten Fahrzeuges (4) und/oder durch ein Aktoriksystem (14) in die mindestens zwei unterschiedlichen Standpunkte (SP1, SP2) gebracht wird, wobei das Aktoriksystem (14) die Mono-Kamera (8a) unabhängig von der Fahrdynamik (D4) des Fahrzeuges (4) in die unterschiedlichen Standpunkte (SP1, SP2) verstellen kann.

5. Verfahren nach einem der vorhergehenden Ansprüche, **dadurch gekennzeichnet, dass** das Erfassen eines dreidimensionalen Objektes (12) in der Umgebung (U) um das Fahrzeug (4) über einen LIDAR-Sensor (8d) und/oder eine Time-of-Flight-Kamera (8e) und/oder eine Structured-Light-Kamera (8f) und/oder einen bildgebenden Radar-Sensor (8g) erfolgt, wobei das Ermitteln von Tiefen-Informationen (TI) des erfassten dreidimensionalen Objektes (12) durch eine Laufzeitmessung (LM) von ausgesendeter elektromagnetischer Strahlung (EMa) und reflektierter elektromagnetischer Strahlung (EMb) erfolgt, mit der ein Erfassungsbereich (E8) des jeweiligen Sensors (8; 8d, 8e, 8f, 8g) abgescannt wird.

6. Verfahren nach einem der vorhergehenden Ansprüche, **dadurch gekennzeichnet, dass** der Objekt-Identifikator (ID12) durch einen Sensor (8) erfasst wird.

7. Verfahren nach Anspruch 6, **dadurch gekennzeichnet, dass** als Objekt-Identifikator (ID12)
- eine 2D-Markierung (11b), z.B. ein Buchstabe (15a) und/oder eine Zahl (15b) und/oder ein QR-Code (15c) und/oder ein Aruco-Marker (15d), und/oder
- eine 3D-Markierung (12d)
erfasst wird, wobei sich die 2D-Markierung (11b) und/oder die 3D-Markierung (12d) auf oder benachbart zu dem erfassten dreidimensionalen Objekt (12) befindet.

8. Verfahren nach Anspruch 6 oder 7, **dadurch gekennzeichnet, dass** als Objekt-Identifikator (ID12) ein Öffnungszustand (Z) eines Rampentores (3a) einer Rampe (3) erfasst wird, wenn als dreidimensionales Objekt (12) eine Rampe (3) erfasst wird, und ein geöffnetes Rampentor (3a) als Ziel-Identifikator (IDZ) des Ziel-Objekts (12Z) vorgegeben wird.

9. Verfahren nach einem der vorhergehenden Ansprüche, **dadurch gekennzeichnet, dass** der Objekt-Identifikator (ID12) mit dem Ziel-Identifikator (IDZ) übereinstimmt, wenn diese inhaltlich identisch sind.

10. Verfahren nach einem der vorhergehenden Ansprüche, **dadurch gekennzeichnet, dass** eine Suchroutine (SR) durchgeführt wird, wenn der Objekt-Identifikator (ID12) des erfassten Objektes (12) nicht mit dem Ziel-Identifikator (IDZ) des Ziel-Objektes (12Z) übereinstimmt, wobei im Rahmen der Suchroutine (SR) sukzessive weitere dreidimensionale Objekte (12) auf dem Betriebshof (1) erfasst (ST1), klassifiziert (ST2) und identifiziert werden (ST3), bis der Objekt-Identifikator (ID12) des erfassten dreidimensionalen Objektes (12) mit dem Ziel-Identifikator (IDZ) des Ziel-Objektes (12Z) übereinstimmt.

11. Verfahren nach Anspruch 10, **dadurch gekennzeichnet, dass** das Fahrzeug (4) im Rahmen der Suchroutine (SR) automatisiert und/oder manuell in eine Fahrtrichtung (FR) bewegt wird, um sukzessive weitere dreidimensionale Objekte (12) zu erfassen, wobei die Fahrtrichtung (FR) in Abhängigkeit des erfassten Objekt-Identifikators (ID12), der nicht mit dem Ziel-Identifikator (IDZ) übereinstimmt, derartig festgelegt wird, dass in aufsteigender oder absteigender Rangfolge Objekt-Identifikatoren (ID12) für dreidimensionale Objekte (12) ermittelt werden, die sich an den Ziel-Identifikator (IDZ) annähern.

12. Verfahren nach einem der vorhergehenden Ansprüche, **dadurch gekennzeichnet, dass** das Fahrzeug (4) in Abhängigkeit des Anfahr-Signals (SA) automatisiert oder manuell über ein Antriebssystem (4c) und/oder ein Bremssystem (4b) und/oder ein Lenksystem (4a) entlang einer vorgegebenen Trajektorie (TR) gesteuert wird zum Annähern an das dreidimensionale Ziel-Objekt (12Z).

13. Verfahren nach Anspruch 12, **dadurch gekennzeichnet, dass** das Fahrzeug (4) nach dem Ausgeben des Anfahr-Signals (SA) zunächst automatisiert oder manuell zu einem Startpunkt (TR1) der Trajektorie (TR) gesteuert wird.

14. Verfahren nach Anspruch 12 oder 13, **dadurch gekennzeichnet, dass** die Trajektorie (TR) und/oder der Startpunkt (TR1) abhängig von der Objektklasse (Kn) und/oder der Pose (PO) des dreidimensionalen Objektes (12) und abhängig von dem Fahrzeug (4), insbesondere eines angekuppelten Anhängers (4d), ist.

15. Verfahren nach einem der Ansprüche 12 bis 14, **dadurch gekennzeichnet, dass** die Trajektorie (TR) in Abhängigkeit einer dem dreidimensionalen Ziel-Objekt (12Z) zugeordneten Linie (11a; 18) vorgegeben wird.

16. Verfahren nach einem der Ansprüche 12 bis 15, **dadurch gekennzeichnet, dass** bei einer manuellen Steuerung des Fahrzeuges (4) über eine Anzeigeeinrichtung (20) Fahrt-Anweisungen (AF) in Abhängigkeit des Anfahr-Signals (SA) ausgegeben werden, um ein manuelles Annähern des Fahrzeuges (4) an das dreidimensionale Ziel-Objekt (12Z) zu ermöglichen.

17. Fahrt-Steuereinheit (6), insbesondere zur Durchführung eines Verfahrens nach einem der vorhergehenden Ansprüche, wobei die Fahrt-Steuereinheit (6) ausgebildet ist, mindestens die folgenden Schritte durchzuführen:
- Erfassen eines dreidimensionalen Objektes (12) in einer Umgebung (U) um das Fahrzeug (4) und Ermitteln von ortsaufgelösten Tiefen-Informationen (TI) des erfassten dreidimensionalen Objektes (12) ;
- wobei anhand der Tiefen-Information (TI) eine Objekt-Form (F12) und/oder eine Objekt-Kontur (C12) des erfassten dreidimensionalen Objektes (12) ermittelt wird und dem erfassten dreidimensionalen Objekt (12) in Abhängigkeit der Objekt-Form (F12) und/oder der Objekt-Kontur (C12) eine Objektklasse (Kn) und eine Pose (PE) relativ zum Fahrzeug zugeordnet wird, wobei das erfasste dreidimensionale Objekt (12) über eine Pose (PE) lokalisiert wird und wobei die Pose (PE) des erfassten dreidimensionalen Objektes (12) durch einen modellbasierten Vergleich ermittelt wird, bei dem ein Modell des erfassten dreidimensionalen Objektes (12) mit der Objekt-Form und/oder der Objekt-Kontur des erfassten dreidimensionalen Objektes (12) verglichen wird;
- Klassifizieren des erfassten dreidimensionalen Objektes (12) anhand der ermittelten Tiefen-Informationen (TI) und Prüfen, ob das erfasste dreidimensionale Objekt (12) dieselbe Objektklasse (Kn) aufweist wie ein dem Fahrzeug (4) zugewiesenes dreidimensionales Ziel-Objekt (12Z);
- Identifizieren des erfassten dreidimensionalen Objektes (12), wenn das dreidimensionale Objekt (12) dieselbe Objektklasse (Kn) aufweist wie das dreidimensionale Ziel-Objekt (12Z), durch Erfassen eines dem dreidimensionalen Objekt (12) zugeordneten Objekt-Identifikators (ID12) und Prüfen, ob der erfasste Objekt-Identifikator (ID12) mit einem dem Ziel-Objekt (12Z) zugeordneten Ziel-Identifikator (IDZ) übereinstimmt, und
- Ausgeben eines Anfahr-Signals (SA) zum automatisierten oder manuellen Annähern des Fahrzeuges (4) an das erfasste dreidimensionale Ziel-Objekt (12Z), wenn der Objekt-Identifikator (ID12) mit dem Ziel-Identifikator (IDZ) übereinstimmt.

18. Fahrt-Steuereinheit (6) nach Anspruch 17, **dadurch gekennzeichnet, dass** die Fahrt-Steuereinheit (6) ferner ausgebildet ist, eine Fahrdynamik (D4) des Fahrzeuges (4) in Abhängigkeit des Anfahr-Signals (SA) automatisiert zu beeinflussen, beispielsweise über ein Lenksystem (4a) und/oder ein Bremssystem (4b) und/oder ein Antriebssystem (4c) des Fahrzeuges (4).

19. Fahrt-Steuereinheit (6) nach Anspruch 17 oder 18, **dadurch gekennzeichnet, dass** die Fahrt-Steuereinheit (6) ferner ausgebildet ist, in Abhängigkeit des Anfahr-Signals (SA) eine Anzeigeeinrichtung (20) anzusteuern zum Anzeigen von Fahrt-Anweisungen (AF) auf einer Anzeigeeinrichtung (20) in Abhängigkeit des Anfahr-Signals (SA) zum Ermöglichen eines manuellen Annäherns des Fahrzeuges (4) an das dreidimensionale Ziel-Objekt (12Z).

20. Fahrzeug (4) mit einer Fahrt-Steuereinheit (6) nach einem der Ansprüche 17 bis 19 zum automatisierten oder manuellen Steuern des Fahrzeuges (4) in Abhängigkeit eines Anfahr-Signals (SA).

## Claims

1. Method for controlling a vehicle (4) at a depot (1), comprising at least the following steps:
- allocating a three-dimensional target object (12Z) to the vehicle (4) (ST0);
- detecting a three-dimensional object (12) in the surroundings (U) around the vehicle (4) and ascertaining spatially resolved depth information (TI) relating to the detected three-dimensional object (12) (ST1);
- wherein, on the basis of the depth information (TI), an object shape (F12) and/or an object contour (C12) of the detected three-dimensional object (12) is ascertained and an object class (Kn) and a pose (PE) relative to the vehicle are assigned to the detected three-dimensional object (12) depending on the object shape (F12) and/or the object contour (C12), wherein the detected three-dimensional object (12) is located via a pose (PE) and wherein the pose (PE) of the detected three-dimensional object (12) is ascertained by a model-based comparison in which a model of the detected three-dimensional object (12) is compared to the object shape and/or the object contour of the detected three-dimensional object (12);
- classifying the detected three-dimensional object (12) on the basis of the ascertained depth information (TI) and checking if the detected three-dimensional object (12) has the same object class (Kn) as the three-dimensional target object (12Z) (ST2);
- identifying the detected three-dimensional object (12) if the detected three-dimensional object (12) has the same object class (Kn) as the three-dimensional target object (12Z) by detecting an object identifier (ID12) assigned to the three-dimensional object (12) and checking if the object identifier (ID12) matches a target identifier (IDZ) assigned to the target object (12Z) (ST3);
- outputting a start signal (SA) for the vehicle (4) to automatically or manually approach the detected three-dimensional target object (12Z) if the object identifier (ID12) matches the target identifier (IDZ).

2. Method according to claim 1, **characterized in that** the three-dimensional target object (12Z) is a ramp (3) for loading or unloading cargo (F), or a parked trailer (12a), or a swap body (12b), or a bulk cargo area (12d), or a container (12e).

3. Method according to claim 1 or 2, **characterized in that** a three-dimensional object (12) is detected in the surroundings (U) around the vehicle (4) via at least one mono camera (8a) and/or at least one stereo camera (8b), wherein depth information (TI) relating to the detected three-dimensional object (12) is ascertained by triangulation (T) from at least two recorded images (B), wherein the images (B) are recorded from at least two different viewpoints (SP1, SP2) with the mono camera (8a) and/or with the stereo camera (8b).

4. Method according to claim 3, **characterized in that** the mono camera (8a) and/or at least one stereo camera (8b) is brought into the at least two different viewpoints (SP1, SP2) by an automatically controlled change in driving dynamics (D4) of the overall vehicle (4) and/or by an actuator system (14), wherein the actuator system (14) can move the mono camera (8a) into the different viewpoints (SP1, SP2) independently of the driving dynamics (D4) of the vehicle (4).

5. Method according to any of the preceding claims, **characterized in that** a three-dimensional object (12) is detected in the surroundings (U) around the vehicle (4) via a LIDAR sensor (8d) and/or a time-of-flight camera (8e) and/or a structured-light camera (8f) and/or an imaging radar sensor (8g), wherein depth information (TI) relating to the detected three-dimensional object (12) is ascertained by a time-of-flight measurement (LM) of emitted electromagnetic radiation (EMa) and reflected electromagnetic radiation (EMb), with which a detection area (E8) of the particular sensor (8; 8d, 8e, 8f, 8g) is scanned.

6. Method according to any of the preceding claims, **characterized in that** the object identifier (ID12) is detected by a sensor (8).

7. Method according to claim 6, **characterized in that** detected as the object identifier (ID12) is
- a 2D marker (11b), e.g., a letter (15a) and/or a number (15b) and/or a QR code (15c) and/or an ArUco marker (15d), and/or
- a 3D marker (12d), wherein the 2D marker (11b) and/or the 3D marker (12d) is located on or adjacent to the detected three-dimensional object (12).

8. Method according to claim 6 or 7, **characterized in that** detected as the object identifier (ID12) is an opening state (Z) of a ramp gate (3a) of a ramp (3) if a ramp (3) is detected as the three-dimensional object (12), and an open ramp gate (3a) is specified as the target identifier (IDZ) of the target object (12Z).

9. Method according to any of the preceding claims, **characterized in that** the object identifier (ID12) matches the target identifier (IDZ) if they are identical in content.

10. Method according to any of the preceding claims, **characterized in that** a search routine (SR) is performed if the object identifier (ID12) of the detected object (12) does not match the target identifier (IDZ) of the target object (12Z), wherein as part of the search routine (SR), successive further three-dimensional objects (12) at the depot (1) are detected (ST1), classified (ST2), and identified (ST3), until the object identifier (ID12) of the detected three-dimensional object (12) matches the target identifier (IDZ) of the target object (12Z).

11. Method according to claim 10, **characterized in that** the vehicle (4) is automatically and/or manually moved in a travel direction (FR) as part of the search routine (SR) in order to detect successive further three-dimensional objects (12), wherein depending on the detected object identifier (ID12) that does not match the target identifier (IDZ), the travel direction (FR) is established in such a way that object identifiers (ID12) for three-dimensional objects (12) that approximate the target identifier (IDZ) are ascertained in ascending or descending order.

12. Method according to any of the preceding claims, **characterized in that** depending on the start signal (SA), the vehicle (4) is automatically or manually controlled along a specified trajectory (TR) via a drive system (4c) and/or a brake system (4b) and/or a steering system (4a) to approach the three-dimensional target object (12Z).

13. Method according to claim 12, **characterized in that** the vehicle (4) is initially automatically or manually controlled to a starting point (TR1) of the trajectory (TR) after the start signal (SA) has been output.

14. Method according to claim 12 or 13, **characterized in that** the trajectory (TR) and/or the starting point (TR1) depends on the object class (Kn) and/or the pose (PO) of the three-dimensional object (12) and on the vehicle (4), in particular a coupled trailer (4d).

15. Method according to any of claims 12 to 14, **characterized in that** the trajectory (TR) is specified depending on a line (11a; 18) assigned to the three-dimensional target object (12Z).

16. Method according to any of claims 12 to 15, **characterized in that** if the vehicle (4) is manually controlled via a display device (20), driving instructions (AF) are output depending on the start signal (SA) in order to allow the vehicle (4) to manually approach the three-dimensional target object (12Z).

17. Driving control unit (6), in particular for performing a method according to any of the preceding claims, wherein the driving control unit (6) is designed to perform at least the following steps:
- detecting a three-dimensional object (12) in surroundings (U) around the vehicle (4) and ascertaining spatially resolved depth information (TI) relating to the detected three-dimensional object (12);
- wherein, on the basis of the depth information (TI), an object shape (F12) and/or an object contour (C12) of the detected three-dimensional object (12) is ascertained and an object class (Kn) and a pose (PE) relative to the vehicle are assigned to the detected three-dimensional object (12) depending on the object shape (F12) and/or the object contour (C12), wherein the detected three-dimensional object (12) is located via a pose (PE) and wherein the pose (PE) of the detected three-dimensional object (12) is ascertained by a model-based comparison in which a model of the detected three-dimensional object (12) is compared to the object shape and/or the object contour of the detected three-dimensional object (12);
- classifying the detected three-dimensional object (12) on the basis of the ascertained depth information (TI) and checking if the detected three-dimensional object (12) has the same object class (Kn) as a three-dimensional target object (12Z) allocated to the vehicle (4);
- identifying the detected three-dimensional object (12) if the three-dimensional object (12) has the same object class (Kn) as the three-dimensional target object (12Z) by detecting an object identifier (ID12) assigned to the three-dimensional object (12) and checking if the detected object identifier (ID12) matches a target identifier (IDZ) assigned to the target object (12Z); and
- outputting a start signal (SA) for the vehicle (4) to automatically or manually approach the detected three-dimensional target object (12Z) if the object identifier (ID12) matches the target identifier (IDZ).

18. Driving control unit (6) according to claim 17, **characterized in that** the driving control unit (6) is further designed to automatically influence driving dynamics (D4) of the vehicle (4) depending on the start signal (SA), for example via a steering system (4a) and/or a brake system (4b) and/or a drive system (4c) of the vehicle (4).

19. Driving control unit (6) according to claim 17 or 18, **characterized in that** the driving control unit (6) is further designed to control, depending on the start signal (SA), a display device (20) to display driving instructions (AF) on a display device (20) depending on the start signal (SA) to allow the vehicle (4) to manually approach the three-dimensional target object (12Z).

20. Vehicle (4) with a driving control unit (6) according to any of claims 17 to 19 for automatically or manually controlling the vehicle (4) depending on a start signal (SA).

## Revendications

1. Procédé permettant de commander un véhicule (4) dans un dépôt (1), comportant au moins les étapes suivantes :
- attribution d'un objet cible (12Z) tridimensionnel au véhicule (4) (ST0) ;
- détection d'un objet tridimensionnel (12) dans l'environnement (U) autour du véhicule (4) et détermination d'informations de profondeur (TI) à résolution spatiale de l'objet tridimensionnel (12) détecté (ST1) ;
- dans lequel une forme d'objet (F12) et/ou un contour d'objet (C12) de l'objet tridimensionnel (12) détecté sont déterminés à l'aide des informations de profondeur (TI) et une classe d'objet (Kn) et une pose (PE) par rapport au véhicule sont associées à l'objet tridimensionnel (12) détecté en fonction de la forme d'objet (F12) et/ou du contour d'objet (C12), dans lequel l'objet tridimensionnel (12) détecté est localisé par l'intermédiaire d'une pose (PE) et dans lequel la pose (PE) de l'objet tridimensionnel (12) détecté est déterminée par une comparaison basée sur un modèle dans laquelle un modèle de l'objet tridimensionnel (12) détecté est comparé avec la forme d'objet et/ou le contour d'objet de l'objet tridimensionnel (12) détecté ;
- classification de l'objet tridimensionnel (12) détecté à l'aide des informations de profondeur (TI) déterminées et fait de vérifier si l'objet tridimensionnel (12) détecté présente la même classe d'objet (Kn) que l'objet cible (12Z) tridimensionnel (ST2) ;
- identification de l'objet tridimensionnel (12) détecté lorsque l'objet tridimensionnel (12) détecté présente la même classe d'objet (Kn) que l'objet cible (12Z) tridimensionnel en détectant un identifiant d'objet (ID12) associé à l'objet tridimensionnel (12) et en vérifiant si l'identifiant d'objet (ID12) correspond à un identifiant de cible (IDZ) associé à l'objet cible (12Z) (ST3) ;
- émission d'un signal de mise en marche (SA) pour le rapprochement automatisé ou manuel du véhicule (4) de l'objet cible (12Z) tridimensionnel détecté lorsque l'identifiant d'objet (ID12) correspond à l'identifiant de cible (IDZ).

2. Procédé selon la revendication 1, **caractérisé en ce que** l'objet cible (12Z) tridimensionnel est une rampe (3) permettant le chargement ou le déchargement d'un fret (F), ou une remorque stationnée (12a), ou une caisse mobile (12b), ou un espace pour produits en vrac (12d), ou un conteneur (12e).

3. Procédé selon la revendication 1 ou 2, **caractérisé en ce que** la détection d'un objet tridimensionnel (12) dans l'environnement (U) autour du véhicule (4) est effectuée par l'intermédiaire d'au moins une caméra mono (8a) et/ou d'au moins une caméra stéréoscopique (8b), dans lequel la détermination des informations de profondeur (TI) de l'objet tridimensionnel (12) détecté est effectuée par triangulation (T) à partir d'au moins deux images (B) prises, dans lequel les images (B) sont prises avec la caméra mono (8a) et/ou avec la caméra stéréoscopique (8b) à partir d'au moins deux points de vue (SP1, SP2) différents.

4. Procédé selon la revendication 3, **caractérisé en ce que** la caméra mono (8a) et/ou au moins une caméra stéréoscopique (8b) sont amenées dans les au moins deux points de vue (SP1, SP2) différents par une modification commandée de manière automatisée d'une dynamique de conduite (D4) de l'ensemble du véhicule (4) et/ou par un système d'actionnement (14), dans lequel le système d'actionnement (14) peut régler la caméra mono (8a) dans les différents points de vue (SP1, SP2) indépendamment de la dynamique de conduite (D4) du véhicule (4).

5. Procédé selon l'une des revendications précédentes,
**caractérisé en ce que** la détection d'un objet tridimensionnel (12) dans l'environnement (U) autour du véhicule (4) est effectuée par l'intermédiaire d'un capteur lidar (8d) et/ou d'une caméra à temps de vol (8e) et/ou d'une caméra à lumière structurée (8f) et/ou d'un capteur radar d'imagerie (8g), dans lequel la détermination des informations de profondeur (TI) de l'objet tridimensionnel (12) détecté est effectuée par une mesure du temps de fonctionnement (LM) du rayonnement électromagnétique émis (EMa) et du rayonnement électromagnétique réfléchi (EMb), grâce à laquelle une zone de détection (E8) du capteur (8 ; 8d, 8e, 8f, 8g) respectif est balayée.

6. Procédé selon l'une des revendications précédentes,
**caractérisé en ce que** l'identifiant d'objet (ID12) est détecté par un capteur (8).

7. Procédé selon la revendication 6, **caractérisé en ce que**, sont détectés en tant qu'identifiant d'objet (ID12),
- un repère 2D (11b), par exemple une lettre (15a) et/ou un chiffre (15b) et/ou un code QR (15c) et/ou un marqueur ArUco (15d), et/ou
- un repère 3D (12d), dans lequel le repère 2D (11b) et/ou le repère 3D (12d) se trouvent sur l'objet tridimensionnel (12) détecté ou à proximité de celui-ci.

8. Procédé selon la revendication 6 ou 7, **caractérisé en ce qu'**un état d'ouverture (Z) d'une porte de rampe (3a) d'une rampe (3) est détecté en tant qu'identifiant d'objet (ID12) lorsqu'une rampe (3) est détectée en tant qu'objet tridimensionnel (12) et qu'une porte de rampe (3a) ouverte est prédéfinie en tant qu'identifiant de cible (IDZ) de l'objet cible (12Z).

9. Procédé selon l'une des revendications précédentes, **caractérisé en ce que** l'identifiant d'objet (ID12) correspond à l'identifiant de cible (IDZ) lorsqu'ils sont identiques en contenu.

10. Procédé selon l'une des revendications précédentes,
**caractérisé en ce qu'**une routine de recherche (SR) est mise en œuvre lorsque l'identifiant d'objet (ID12) de l'objet (12) détecté ne correspond pas à l'identifiant de cible (IDZ) de l'objet cible (12Z), dans lequel des objets tridimensionnels (12) supplémentaires sont successivement détectés (ST1), classés (ST2) et identifiés (ST3) dans le dépôt (1) dans le cadre de la routine de recherche (SR) jusqu'à ce que l'identifiant d'objet (ID12) de l'objet tridimensionnel (12) détecté corresponde à l'identifiant de cible (IDZ) de l'objet cible (12Z).

11. Procédé selon la revendication 10, **caractérisé en ce que** le véhicule (4) est déplacé, dans le cadre de la routine de recherche (SR), de manière automatisée et/ou manuelle dans une direction de déplacement (FR) afin de détecter successivement des objets tridimensionnels (12) supplémentaires, dans lequel la direction de déplacement (FR) est spécifiée en fonction de l'identifiant d'objet (ID12) détecté qui ne correspond pas à l'identifiant de cible (IDZ) de telle sorte que des identifiants d'objets (ID12) des objets tridimensionnels (12) qui se rapprochent de l'identifiant de cible (IDZ) sont déterminés par ordre de priorité croissant ou décroissant.

12. Procédé selon l'une des revendications précédentes,
**caractérisé en ce que** le véhicule (4) est commandé, en fonction du signal de mise en marche (SA), de manière automatisée ou manuelle, par l'intermédiaire d'un système d'entraînement (4c) et/ou d'un système de freinage (4b) et/ou d'un système de direction (4a), le long d'une trajectoire (TR) prédéfinie pour le rapprochement de l'objet cible (12Z) tridimensionnel.

13. Procédé selon la revendication 12, **caractérisé en ce que**, après l'émission du signal de mise en marche (SA), le véhicule (4) est d'abord commandé, de manière automatisée ou manuelle, jusqu'à atteindre un point de départ (TR1) de la trajectoire (TR).

14. Procédé selon la revendication 12 ou 13, **caractérisé en ce que** la trajectoire (TR) et/ou le point de départ (TR1) dépendent de la classe d'objet (Kn) et/ou de la pose (PO) de l'objet tridimensionnel (12) et dépendent du véhicule (4), en particulier d'une remorque attelée (4d).

15. Procédé selon l'une des revendications 12 à 14, **caractérisé en ce que** la trajectoire (TR) est prédéfinie en fonction d'une ligne (11a ; 18) associée à l'objet cible (12Z) tridimensionnel.

16. Procédé selon l'une des revendications 12 à 15, **caractérisé en ce que**, lors d'une commande manuelle du véhicule (4) par l'intermédiaire d'un dispositif d'affichage (20), des instructions de déplacement (AF) sont émises en fonction du signal de mise en marche (SA) afin de permettre un rapprochement manuel du véhicule (4) de l'objet cible (12Z) tridimensionnel.

17. Unité de commande de déplacement (6), permettant en particulier la mise en œuvre d'un procédé selon l'une des revendications précédentes, dans laquelle l'unité de commande de déplacement (6) est configurée pour mettre en œuvre au moins les étapes suivantes :
- détection d'un objet tridimensionnel (12) dans un environnement (U) autour du véhicule (4) et détermination d'informations de profondeur (TI) à résolution spatiale de l'objet tridimensionnel (12) détecté ;
- dans laquelle une forme d'objet (F12) et/ou un contour d'objet (C12) de l'objet tridimensionnel (12) détecté sont déterminés à l'aide des informations de profondeur (TI) et une classe d'objet (Kn) et une pose (PE) par rapport au véhicule sont associées à l'objet tridimensionnel (12) détecté en fonction de la forme d'objet (F12) et/ou du contour d'objet (C12), dans laquelle l'objet tridimensionnel (12) détecté est localisé par l'intermédiaire d'une pose (PE) et dans laquelle la pose (PE) de l'objet tridimensionnel (12) détecté est déterminée par une comparaison basée sur un modèle dans laquelle un modèle de l'objet tridimensionnel (12) détecté est comparé avec la forme d'objet et/ou le contour d'objet de l'objet tridimensionnel (12) détecté ;
- classification de l'objet tridimensionnel (12) détecté à l'aide des informations de profondeur (TI) déterminées et fait de vérifier si l'objet tridimensionnel (12) détecté présente la même classe d'objet (Kn) qu'un objet cible (12Z) tridimensionnel attribué au véhicule (4) ;
- identification de l'objet tridimensionnel (12) détecté lorsque l'objet tridimensionnel (12) présente la même classe d'objet (Kn) que l'objet cible (12Z) tridimensionnel en détectant un identifiant d'objet (ID12) associé à l'objet tridimensionnel (12) et en vérifiant si l'identifiant d'objet (ID12) détecté correspond à un identifiant de cible (IDZ) associé à l'objet cible (12Z), et
- émission d'un signal de mise en marche (SA) pour le rapprochement automatisé ou manuel du véhicule (4) de l'objet cible (12Z) tridimensionnel détecté lorsque l'identifiant d'objet (ID12) correspond à l'identifiant de cible (IDZ).

18. Unité de commande de déplacement (6) selon la revendication 17, **caractérisée en ce que** l'unité de commande de déplacement (6) est en outre configurée pour influencer de manière automatisée une dynamique de conduite (D4) du véhicule (4) en fonction du signal de mise en marche (SA), par exemple par l'intermédiaire d'un système de direction (4a) et/ou d'un système de freinage (4b) et/ou d'un système d'entraînement (4c) du véhicule (4).

19. Unité de commande de déplacement (6) selon la revendication 17 ou 18,
**caractérisée en ce que** l'unité de commande de déplacement (6) est en outre configurée pour commander, en fonction du signal de mise en marche (SA), un dispositif d'affichage (20) permettant d'afficher des instructions de déplacement (AF) sur un dispositif d'affichage (20) en fonction du signal de mise en marche (SA) afin de permettre un rapprochement manuel du véhicule (4) de l'objet cible (12Z) tridimensionnel.

20. Véhicule (4) comportant une unité de commande de déplacement (6) selon l'une des revendications 17 à 19 pour la commande automatisée ou manuelle du véhicule (4) en fonction d'un signal de mise en marche (SA).
